(19) Europäisches Patentamt
European Patent Office
Office européen des brevets

(11) Veröffentlichungsnummer: **0 141 367**
**B1**

# (12) EUROPÄISCHE PATENTSCHRIFT

(45) Veröffentlichungstag der Patentschrift: **30.03.88**

(51) Int. Cl.⁴: **C 09 B 62/08**, C 09 B 62/507, D 06 P 3/66

(21) Anmeldenummer: **84112760.8**

(22) Anmeldetag: **23.10.84**

## (54) Reaktivfarbstoffe, deren Herstellung und Verwendung.

(30) Priorität: **26.10.83 CH 5795/83**

(43) Veröffentlichungstag der Anmeldung: **15.05.85 Patentblatt 85/20**

(45) Bekanntmachung des Hinweises auf die Patenterteilung: **30.03.88 Patentblatt 88/13**

(84) Benannte Vertragsstaaten: **CH DE FR GB IT LI**

(56) Entgegenhaltungen:
**EP - A - 0 048 355**
**EP - A - 0 065 732**
**EP - A - 0 070 806**
**EP - A - 0 074 928**
**EP - A - 0 094 055**
**GB - A - 1 007 752**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Scheibli, Peter, Dr., Nussbaumweg 3, CH-4103 Bottmingen (CH)**

(74) Vertreter: **Zumstein, Fritz, Dr. et al, Bräuhausstrasse 4, D-8000 München 2 (DE)**

EP 0 141 367 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Reaktivfarbstoffe sind in grosser Zahl z.B. aus der EP-A 48 355 oder EP-A 94 055 bekannt. Es besteht jedoch weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben. Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

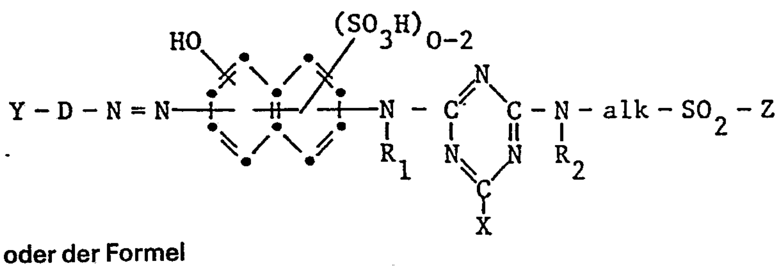

(1)

oder der Formel

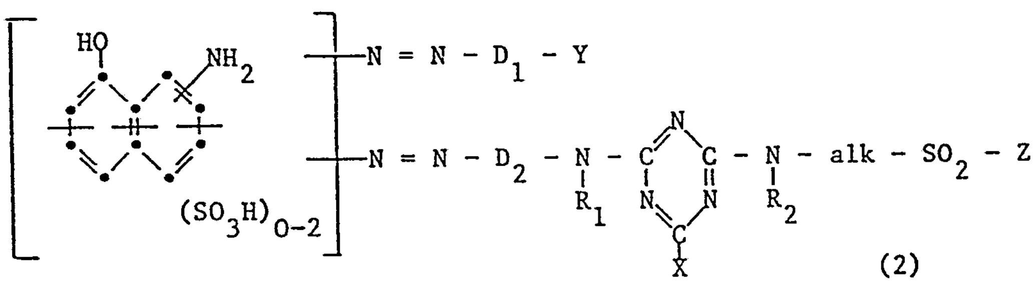

(2)

oder der Formel

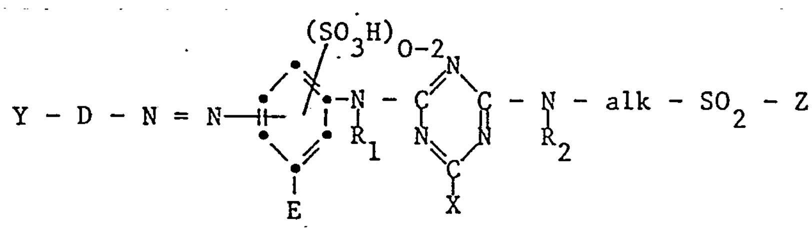

(2a)

sowie deren metallisierte Formen, worin D, $D_1$ und $D_2$ ein Phenylen- oder Naphthylenrest, der weitersubstituiert sein kann, $R_1$ Wasserstoff oder gegebenenfalls substituiertes $C_{1-4}$-Alkyl, $R_2$ Wasserstoff, gegebenenfalls substituiertes Alkyl oder Aryl, oder ein Rest der Formel -alk-$SO_2$-Z, E -$NH_2$, -$CH_3$, -NH-CO-$NH_2$, -NH-CO-$CH_3$ oder -NH-CO-$CH_2$-OH, alk $C_{2-6}$-Alkylen, Y ein Rest -$SO_2$-Z, -$SO_2$-N($R_1$)-Z, -N($R_1$)-$SO_2$-Z, -N($R_1$)-CO-$(CH_2)_{3-5}$-$SO_2$-Z, -$SO_2$-F, -$SO_2$-$CH_2$-CH=$CH_2$, -N($R_1$)-CO-CBr=$CH_2$, -N($R_1$)-CO-CHBr-$CH_2$Br, -N($R_1$)-CO-CCl=$CH_2$, -N($R_1$)-CO-CHCl-$CH_2$Cl, -N($R_1$)-CO-$CH_2$Cl oder -N($R_1$)-CO-CH=$CH_2$, Z ein Rest -CH=$CH_2$ oder -$CH_2CH_2$-A, A ein unter alkalischen Bedingungen abspaltbarer anorganischer oder organischer Rest, und X Fluor, Chlor oder Hydroxy ist.

Die Reste D, $D_1$ und $D_2$ in den Formeln (1), (2)

und (2a) können in der üblichen Weise weitersubstituiert sein. Als Beispiele für weitere Substituenten seien genannt Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Äthylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Äthylcarbamoyl, Sulfamoyl, N-Alkylsulfamoyl mit 1 bis 4 Kohlenstoffatomen, wie N-Methyl-sulfamoyl, N-Äethylsulfamoyl, N-Propylsulfamoyl, N-Isopropylsulfamoyl oder Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Als weitere Substituenten kommen vor allem Methyl, Äthyl, Methoxy, Äthoxy, Acetylamino, Benzoylamino, Amino, Chlor, Brom, Ureido, Hydroxy, Carboxy, Sulfomethyl oder Sulfo in Betracht. Vorzugsweise enthalten die Reste D, $D_1$ und $D_2$ eine oder mehrere Sulfonsäuregruppen.

Falls $R_1$ ein Alkylrest ist, kann dieser geradkettig oder verzweigt und ausserdem weitersubstituiert sein, z.B. durch Halogen, Hydroxy, Cyan, $C_{1-4}$-Alkoxy, Carboxy oder Sulfo. Als Beispiele für $R_1$ seien die folgenden Reste genannt: Methyl, Äthyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Äthoxycarbonylmethyl, β-Methoxyäthyl, β-Äthoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $R_1$ Wasserstoff, Methyl oder Äthyl. Der Rest $R_2$ ist z.B. ein Alkylrest, der geradkettig oder verzweigt ist, der vorzugsweise 1 bis 6 Kohlenstoffatome aufweist, und der weitersubstituiert sein kann, z.B. durch Halogen, Hydroxy, Cyan, Alkoxy, Carboxy, oder Sulfo, oder ein unsubstituierter Alkylrest mit 7 bis 20 Kohlenstoffatomen, ein Cyclohexylrest, oder ein Phenylrest, der z.B. durch Methyl, Äthyl, Methoxy, Äthoxy, Chlor, Brom, Carboxy, Sulfo oder Sulfomethyl substituiert sein kann. Als Beispiele für $R_2$ seien die folgenden Substituenten genannt: Methyl, Äthyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl. Methoxycarbonylmethyl, Äthoxycarbonylmethyl, β-Methoxyäthyl, β-Äthoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Äthylphenyl, p-Methoxyphenyl, o-, m- oder p-Sulfophenyl, p-Carboxyphenyl oder p-Sulfomethylphenyl. Vorzugsweise ist $R_2$ Wasserstoff oder ein Rest der Formel $-alk-SO_2-Z$.

Falls $R_2$ ein Rest der Formel $-alk-SO_2-Z$ ist, können die beiden Reste, welche an das betreffende Stickstoffatom gebunden sind, gleich oder verschieden sein. Vorzugsweise sind beide Reste der Formel $-alk-SO_2-Z$ gleich.

Das Brückenglied alk ist ein geradkettiger oder verzweigter Alkylenrest mit 2 bis 6 Kohlenstoffatomen, z.B. Äthylen, n-Propylen, Isopropylen, n-Butylen, n-Pentylen und n-Hexylen. Vorzugsweise ist alk der Äthylenrest.

Als ein unter alkalischen Bedingungen abspaltbarer anorganischer oder organischer Rest kommt eine der folgenden anionisch abspaltbaren Gruppen in Betracht:

$-OSO_3H$, $-SSO_3H$, $-OCOCH_3$, $-OPO_3H_2$, -O-CO- 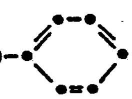 , 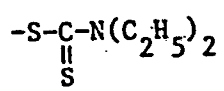 ,

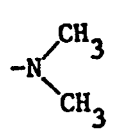 , 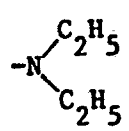 , 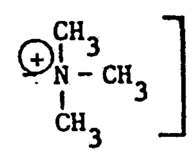 $U^{\ominus}$ (U = Halogen) ,

-Cl, -Br, -F, 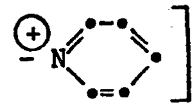 $Cl^{\ominus}$ , $[\overset{\oplus}{-N}(CH_3)_3]$ $CH_3SO_4^{\ominus}$ ,

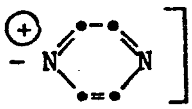 $U^{\ominus}$ , (U = Halogen), 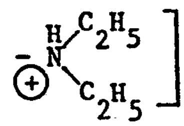 $Cl^{\ominus}$ ,

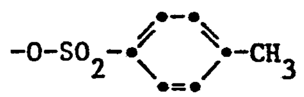, $-O-SO_2-N(CH_3)_2$, 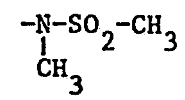, $-O-SO_2-CH_3$,

$-S-C{=}N$, 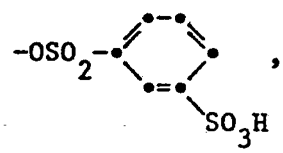, 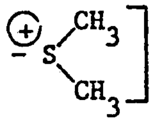 $CH_3SO_4^{\ominus}$, 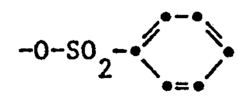,

$-OOCCCl_3$, $-OOCCHCl_2$, $-OOCCH_2Cl$, $-O-O_2SR$ (R= Alkyl oder Aryl),

$-O-SO_2-N(C_2H_5)_2$, 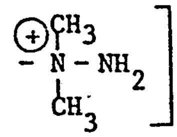 $Cl^{\ominus}$, 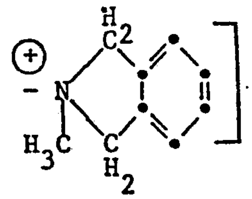 $Cl^{\ominus}$.

Als Beispiele für Y seien genannt: β-Sulfatoäthylsulfonyl, Vinylsulfonyl, β-Sulfatoäthylaminosulfonyl, N-Methyl-N-β-sulfatoäthylaminosulfonyl, N-Äthyl-N-β-sulfatoäthylaminosulfonyl, β-Chloräthylsulfonyl, Chloracetylamino a,β-Dichlorpropionylamino, a,β-Dibrompropionylamino, a-Bromacryloylamino und 4-(β-Chloräthylsulfonyl)-butyrylamino. Vorzugsweise ist Y Sulfatoäthylsulfonyl oder Vinylsulfonyl.

Als Beispiele für den Rest $-N(R_2)$-alk-$SO_2$-Z seien genannt: β-(β-Chloräthyl-sulfonyl)-äthylamino, γ-(β-Chloräthyl-sulfonyl)-propylamino, Bis-[β-(β-chloräthyl-sulfonyl)-äthyl]-amino, N-Methyl-N-β-(β-chloräthyl-sulfonyl)-äthylamino, N-Phenyl-N-β-(β-chloräthyl-sulfonyl)-äthylamino, β-Vinylsulfonyl-äthylamino, Bis-(β-vinylsulfonyl-äthyl)-amino, N-β-Sulfatoäthyl-N-β-(β-chloräthyl-sulfonyl)-äthylamino, β-(β-Sulfatoäthyl-sulfonyl)-äthylamino, δ-(β-Chloräthyl-sulfonyl)-butyrylamino und δ-Vinyl-sulfonyl-butyrylamino. Bevorzugt sind β-(β-Chloräthyl-sulfonyl)-äthylamino und β-Vinylsulfonyl-äthylamino.

Der Substituent X ist vor allem Chlor und insbesondere Fluor.

Bevorzugt sind:

Reaktivfarbstoffe der Formel

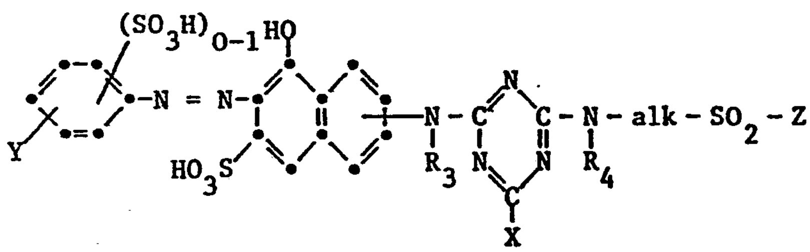

(3),

worin $R_3$ Wasserstoff, Methyl oder Äthyl, $R_4$ Wasserstoff oder ein Rest -alk-$SO_2$-Z, alk $C_{2-6}$-Alkylen, Y ein Rest $-SO_2$-Z, Z ein Rest $-CH{=}CH_2$ oder $-CH_2CH_2$-A, A Sulfato, Acetoxy, Chlor, Phosphato oder Thiosulfato, und X Fluor, Chlor oder Hydroxy ist.

Reaktivfarbstoffe der Formel

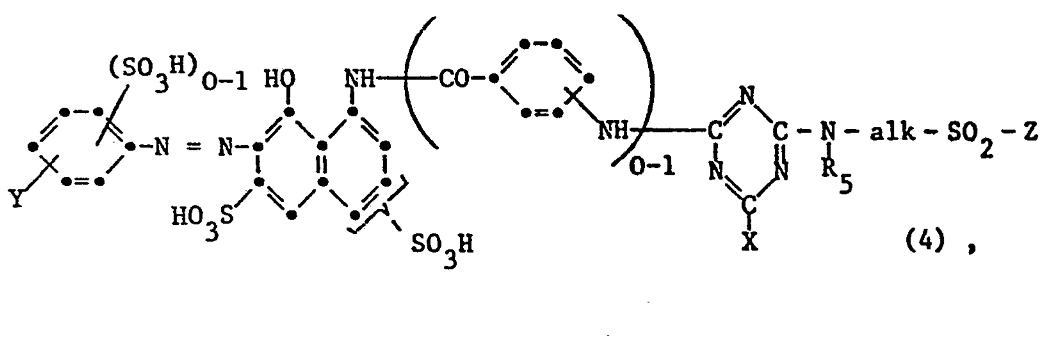

(4),

worin $R_5$ Wasserstoff oder ein Rest -alk-$SO_2$-Z, alk $C_{2-6}$-Alkylen, Y ein Rest $-SO_2$-Z, Z ein Rest $-CH{=}CH_2$ oder $-CH_2CH_2$-A, A Sulfato, Acetoxy, Chlor, Phosphato oder Thiosulfato, und X Fluor, Chlor oder Hydroxy ist.

Reaktivfarbstoffe der Formel

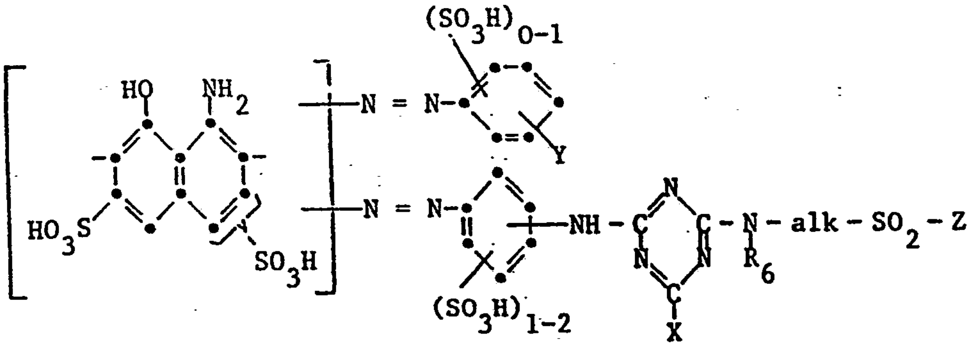

(5) ,

worin $R_6$ Wasserstoff oder ein Rest -alk-$SO_2$-Z, alk $C_{2-6}$-Alkylen, Y ein Rest -$SO_2$-Z, Z ein Rest -CH=$CH_2$ oder -$CH_2CH_2$-A, A Sulfato, Acetoxy, Chlor, Phosphato oder Thiosulfato, und X Fluor, Chlor oder Hydroxy ist.

Reaktivfarbstoffe der Formeln

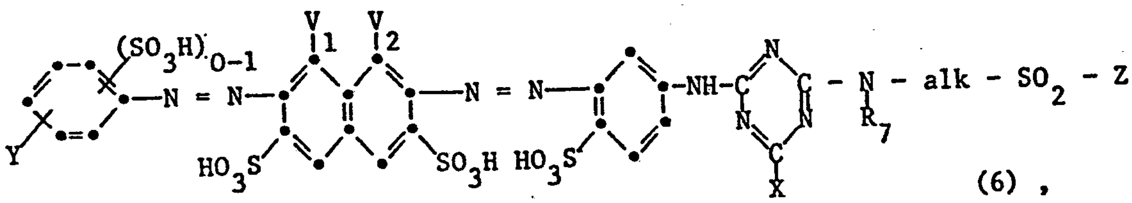

(6) ,

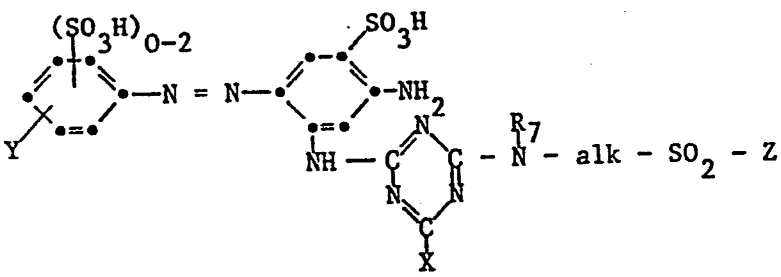

(6a) ,

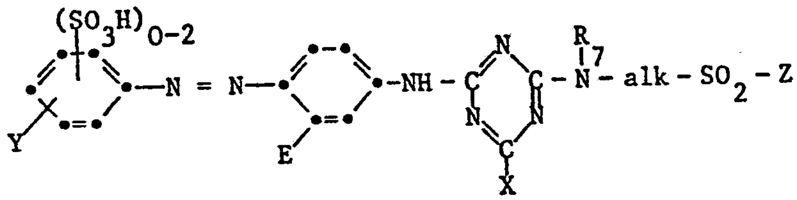

(6b)

worin $R_7$ Wasserstoff oder ein Rest -alk-$SO_2$-Z, alk $C_{2-6}$-Alkylen, Y ein Rest -NH-CO-CHBr-$CH_2$-Br, -NH-CO-CBr=$CH_2$ oder -$SO_2$-Z, Z ein Rest -CH=$CH_2$ oder -$CH_2CH_2$-A, A Sulfato, Acetoxy, Chlor. Phosphato oder Thiosulfato, X Fluor, Chlor oder Hydroxy, E -$NH_2$, -$CH_3$, -NH-CO-$NH_2$ oder -NH-CO-$CH_3$, und ein V OH und das andere V $NH_2$ ist.

Der Reaktivfarbstoff der Formel

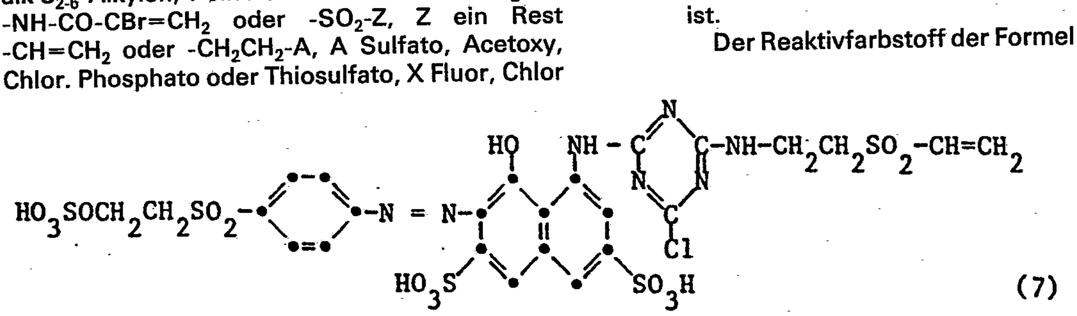

(7) .

Der Reaktivfarbstoff der Formel

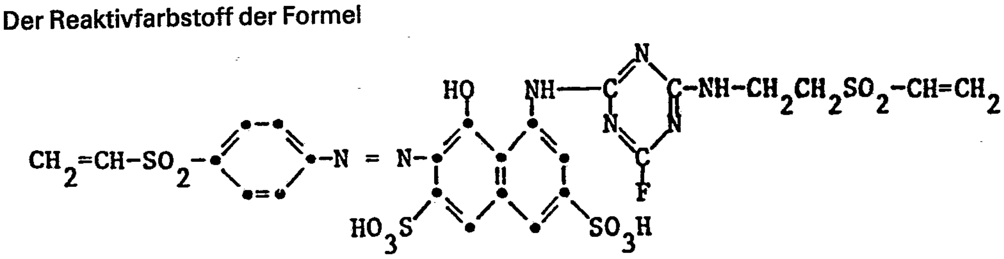

(8) .

Der Reaktivfarbstoffe der Formel

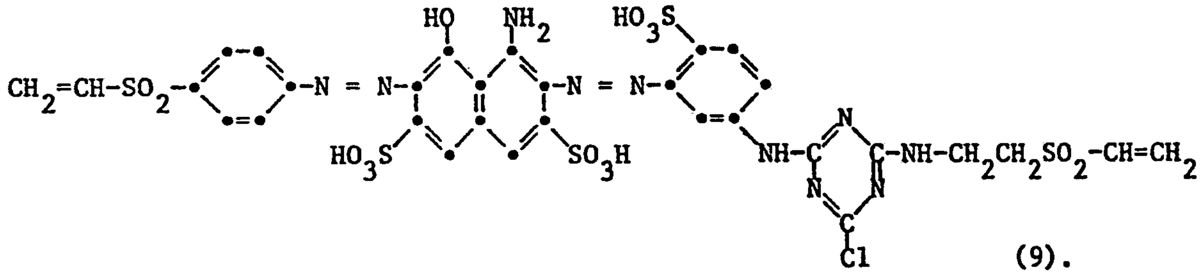

(9).

Das Verfahren zur Herstellung der Reaktivfarbstoffe der Formeln (1), (2) oder (2a) ist dadurch gekennzeichnet, dass man Farbstoffe der Formeln

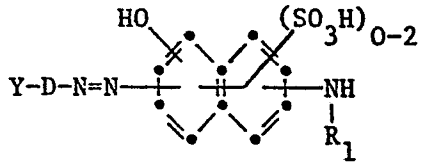

(10),

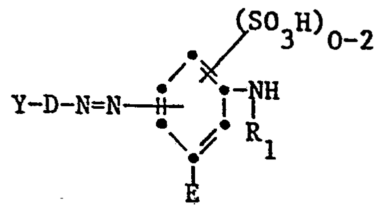

(10a)

oder

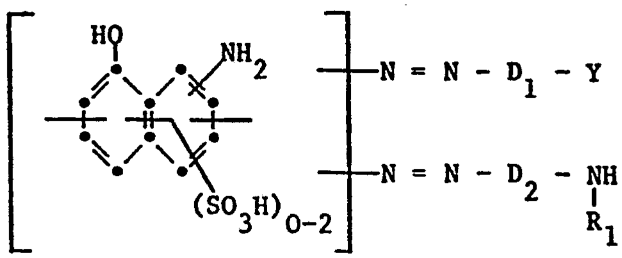

(11)

ihre Vorprodukte mit Reaktivkomponenten zur Einführung der Reste

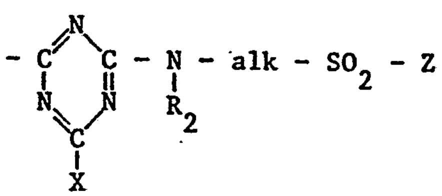

(12)

zu Reaktivfarbstoffen der Formel (1), (2) oder (2a) umsetzt, oder die erhaltenen Zwischenprodukte in die gewünschten Endfarbstoffe überführt, und gegebenenfalls eine weitere Umwandlungsreaktion anschliesst.

Die Einführung des Restes Y und des Restes der Formel (12) in den Farbstoff der Formel (10), (10a) bzw. (11) erfolgt in an sich bekannter Weise, z.B. durch Acylierung mit entsprechenden Carbonsäurehalogeniden oder -anhydriden, sowie Kondensation mit Cyanurhalogeniden und Aminen der Formel

$$HN(R_2) - alk - SO_2 - Z \quad (13)$$

Falls Y ein über eine Aminogruppe $-N(R_1)-$ gebundener Rest ist, muss D bzw. $D_1$ eine entsprechende Aminogruppe enthalten. Man verwendet in diesem Falle als Diazokomponente ein Diamin oder eine entsprechende Amino-acetylamino- oder Amino-nitroverbindung, worin die Acetylamino- bzw. Nitrogruppe vor der Kondensation mit dem Acylierungsmittel durch Verseifen bzw. Reduzieren in die $NH_2$ Gruppe übergeführt wird. Ist Y dagegen ein direkt gebundener Sulfonylrest, geht man von einem Vorprodukt aus, das diesen Rest bereits enthält, z.B. verwendet man 1-Amino-4-β-sulfatoäthylsulfonylbenzol als Diazokomponente. Bei der Herstellung der Endfarbstoffe aus Vorprodukten handelt es sich um Kupplungen oder Umsetzungen an den Reaktivresten.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nach einander aus, wobei die Reihenfolge der einfachen Reaktionen zwischen den einzelnen Reaktionskomponenten vorteilhafterweise sich nach den

besonderen Bedingungen richtet. Da unter bestimmten Voraussetzungen Hydrolyse eines Fluortriazinrestes eintritt, muss ein Zwischenprodukt, welches Acetylaminogruppen enthält, zwecks Abspaltung der Acetylgruppen verseift werden, bevor mit einem Aminodifluortriazin oder Trifluortriazin kondensiert wird. Welche Reaktion bei der Herstellung eines sekundären Kondensationsproduktes aus einem Amin $HN(R_2)$-alk-$SO_2$-Z, 2,4,6-Trifluor-s-triazin und Diaminobenzolsulfonsäure zweckmässigerweise zuerst aufgeführt wird, die des Trifluortriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen.

Eine Ausführungsform besteht z.B. darin, dass man eine Diazokomponente, die eine acylierbare Gruppe $-N(R_1)H$ enthält, mit einem Acylhalogenid acyliert, das Reaktionsprodukt diazotiert, auf eine Kupplungskomponente, die eine Gruppe $-N(R_1)$ H enthält, kuppelt, und die erhaltene Monoazoverbindung mit einem Aminodihalogentriazin der Formel

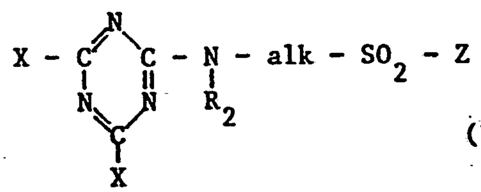

(14) ,

worin X Fluor oder Chlor ist, kondensiert, oder mit einem Trihalogen-s-triazin acyliert, und nachträglich mit einem Amin der Formel (13) kondensiert.

Eine weitere Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Y einen Rest $HO-CH_2CH_2-$ enthält, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Y die Vinylgruppe $H_2C=CH-$ enthält, und lagert an das Zwischenprodukt Thioschwefelsäure an, wobei ein Rest $HO_3SS-CH_2CH_2-$entsteht.

Die Sulfatierung der Hydroxygruppe in einem Farbstoff der Formel (10) oder (11) oder einem geeigneten Vorprodukt, erfolgt vorzugsweise durch Umsetzung mit konzentrierter Schwefelsäure bei 0°C bis mässig erhöhter Temperatur. Diese Sulfatierung kann auch durch Reaktion der Hydroxyverbindung mit 1 Äquivalent Chlorsulfonsäure pro Hydroxygruppe in einem polaren organischen Lösungsmittel wie beispielsweise N-Methylpyrrolidon bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Bei der nachträglichen Sulfatierung wird gegebenenfalls ein Fluoratom am Triazinring durch eine Hydroxygruppe ersetzt.

Die Einführung eines anderen unter alkalischen Bedingungen abspaltbaren anorganischen oder organischen Restes für X in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen. Oder man kann, falls in einem Reaktivfarbstoff der Formel (1) der Rest Y ein a,β-Dibrompropionylaminorest ist, durch Behandlung mit halogenwasserstoffabspaltenden Mitteln, die a,β-Dibrompropionylgruppe in die α-Bromacryloylgruppe umwandeln, gegebenenfalls gleichzeitig mit der oben erwähnten Abspaltung von Schwefelsäure aus einem Sulfatoäthylsulfonylrest.

Der oben beschriebene Weg der Herstellung über eine Zwischenstufe des Reaktivrestes geht in vielen Fällen einheitlich und vollständig.

Die Acylierung der Farbstoffe der Formeln (10) oder (11) oder der Farbstoffvorprodukte mit den Acylhalogeniden bzw. Halogentriazinen erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Reaktivfarbstoffe der Formel (1), worin Y ein direkt gebundener Sulfonylrest ist, sind in der Weise herstellbar, dass man von Farbstoffen der Formeln (10) oder (11) ausgeht, die eine Gruppe Y bereits enthalten, und die Gruppe $-N(R_1)H$ mit einem Halogentriazin acyliert; oder dass man entsprechende Vorprodukte benützt, z.B. eine Diazokomponente der Formel

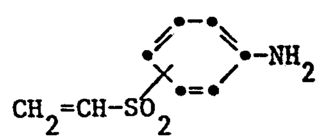

(15)

und diese auf eine Kupplungskomponente, welche eine Gruppe $-N(R_1)H$ enthält, kuppelt, und die Gruppe $-N(R_1)H$ vor oder nach der Kupplung mit einem Halogentriazin acyliert.

Liegen in den hergestellten Reaktivfarbstoffen zur Metallkomplexbildung befähigte Gruppen vor, können die Reaktivfarbstoffe auch nachträglich metallisiert werden.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Diazokomponenten

1,3-Diaminobenzol, 1,4-Diaminobenzol, 1,3-Diamino-4-chlorbenzol, 1,3-Diamino-4-methylbenzol,1,3-Diamino-4-äthylbenzol,1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4′-Diaminostilben, 4,4′-Diaminodiphenylmethan, 4,4′-Diaminobiphenyl (Benzidin), 3,3′-Dimethylbenzidin, 3,3′-Dimethoxybenzidin, 3,3′-Dichlorbenzidin, 3,3′-Dicarboxybenzidin, 3,3′-Dicarboxymethoxy-benzidin, 2,2′-Dimethylbenzidin, 4,2′-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3′- bzw. 4′-Aminobenzoylamino)-1-aminobenzol-6-sulfonsäure, 1-(4′-Aminobenzoylamino)-4-aminobenzol-2,5-disulfonsäure, 1,4-Diaminobenzol-2-carbonsäure,1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4′-Diaminodiphenyloxid, 4,4′-Diaminodiphenylharnstoff-2,2′-disulfonsäure, 4,4′-Diaminodiphenyloxyäthan-2,2′-disulfonsäure, 4,4′-Diaminostilben-2,2′-disulfonsäure, 4,4′-Diaminodiphenyläthan-2,2′-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B.1-Acetylamino-3-aminobenzol-4-sulfonsäure oder 1-Acetylamino-4-aminobenzol-3-sulfonsäure. Beispiele für Diazokomponenten, die eine Gruppe Y bereits enthalten, sind 1-Aminobenzol-2-, -3- oder -4-β-sulfoäthylsulfon, 1-Aminobenzol-3-β-phosphatoäthylsulfon, 1-Amino-4-methylbenzol-3-β-sulfatoäthylsulfon, 1-Aminobenzol-3-β-chloräthylsulfon, 1-Amino-4-methoxybenzol-3-β-sulfatoäthylsulfon, 1-Aminobenzol-4-β-sulfatoäthylsulfon-2-sulfonsäure, 1-Aminobenzol-5-β-sulfatoäthlylsulfon-2-sulfonsäure, 1-Aminobenzol-5-β-sulfatoäthylsulfon-2,4-disulfonsäure, 1-Aminonaphthalin-4-β-sulfatoäthylsulfon, 1-Amino-2,5-dimethoxybenzol-4-β-sulfatoäthylsulfon, 1-Aminobenzol-4-β-sulfatoäthylsulfon-2-carbonsäure, 1-Aminobenzol-5-β-sulfatoäthylsulfon-2-carbonsäure, 1-Amino-2-methoxybenzol-4-β-sulfatoäthylsulfon, 1-Amino-2-chlorbenzol-4-β-sulfatoäthylsulfon, 1-Amino-2-methoxybenzol-5-β-sulfatoäthylsulfon, 2-Aminonaphthalin-8-β-sulfatoäthylsulfon, 2-Aminoaphthalin-8-β-sulfatoäthylsulfon-6-sulfonsäure,1-Amino-2,5-dimethoxybenzol-4-vinylsulfon, 1-Amino-2-methoxy-5-methylbenzol-4-β-sulfatoäthylsulfon, 1-Amino-2,5-diäthoxybenzol-4-β-sulfatoäthylsulfon, 1-Amino-2-brombenzol-4-β-sulfatoäthylsulfon, 1-Amino-2-brombenzol-4-vinylsulfon, 1-Aminobenzol-5-vinylsulfon-2,4-disulfonsäure, 1-Aminobenzol-5-β-phosphatoäthylsulfon-2,4-disulfonsäure, 1-Aminobenzol-5-β-chloräthylsulfon-2,4-disulfonsäure, 2-Aminonaphthalin-8-β-phosphatoäthylsulfon-6-sulfonsäure, 2-Aminoapthalin-8-vinylsulfon-6-sulfonsäure, 1-Amino-2-methoxy-5-methylbenzol-4-β-chloräthylsulfon, 2-Aminophenol-4-β-sulfatoäthylsulfon, 1-Aminobenzol-3- oder -4-vinylsulfon, 1-Amino-2-hydroxybenzol-4-β-sulfatoäthylsulfon, 1-Aminobenzol-5-vinylsulfon-2-sulfonsäure, 3-(N-Methyl-β-sulfato-äthylsulfonylamino)-1-aminobenzol, 3-(N-Äthyl-β-sulfato-äthylsulfonylamino)-1-aminobenzol, 3-β-Sulfatoäthylsulfonylamino-1-aminobenzol.

Kupplungskomponenten

1-Amino-8-hydroxynaphthalin-3,6-disulfonsäure, 1-Amino-8-hydroxynaphthalin-4,6-disulfonsäure, 1-Amino-8-hydroxynaphthalin-4-sulfonsäure, 2-Amino-5-hydroxynaphthalin-7-sulfonsäure, 2-Methylamino-5-hydroxynaphthalin-7-sulfonsäure, 2-Äthylamino-5-hydroxynaphthalin-7-sulfonsäure, 2-Acetylamino-5-hydroxynaphthalin-7-sulfonsäure, 2-(N-Acetyl-N-methylamino)-5-hydroxynaphthalin-7-sulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6- bzw. -4,6-disulfonsäure,1-(3′-Aminobenzoylamino)-8-hydroxynaphthalin-3,6- bzw. -4,6-disulfonsäure, 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 1,3-Diaminobenzol-4-sulfonsäure, 1-Amino-3-methylbenzol, 1-Amino-3-carbamoyl-aminobenzol, 1-Amino-3-acetylaminobenzol, 1-Amino-3- hydroxyacetylaminobenzol.

Reaktivkomponenten

Die Halogenide der weiter vorn genannten Reste Y, z.B. a, β-Dibrompropionylchlorid, α, β-Dichlorpropionylchlorid, α-Bromacrylocylchlorid, α-Chloracrylchlorid, und gegebenenfalls auch gleichartig reagierende Halogensäureanhydride, wie α, β-Dichlorpropionsäure-anhydrid, 4-(β-Chloräthylsulfonyl)-butyrylchlorid, 4-Vinylsulfonyl-butyrylchlorid usw.; sowie 2,4,6-Trifluor-s-triazin (Cyanurfluorid) und 2,4,6-Trichlor-s-triazin (Cyanurchlorid), sowie die primären Kondensationsprodukte von 2,4,6-Trifluor-s-triazin oder 2,4,6-Trichlor-s-triazin mit den unten genannten Aminen der Formel (13).

Amine der Formel (13)

β-(β-Chloräthyl-sulfonyl)-äthyl-amin, β-(β-Bromäthyl-sulfonyl)-äthyl-amin, β-Vinylsulfonyl-äthyl-amin, γ-(β-Chloräthyl-sulfonyl)-propyl-amin, α-(β-Chloräthyl-sulfonyl)-isopropyl-amin, δ-(β-Chloräthyl-sulfonyl)-butylamin, β-(β-Chloräthyl-sulfonyl)-isobutyl-amin, E-(β-Chloräthyl-sulfonyl)-pentyl-amin, β-(β-Chloräthyl-sulfonyl)-hexyl-amin, N-Methyl-N-β-(β-chloräthyl-sulfonyl)-äthyl-amin, N-Äthyl-N-β-(β-chloräthyl-sulfonyl)-äthyl-amin, N-Propyl-N-β-(β-chloräthyl-sulfonyl)-äthyl-amin, N-Butyl-N-β-(β-chloräthyl-sulfonyl)-äthyl-amin, N-Pentyl-N-β-(β-chloräthyl-sulfonyl)-äthyl-amin, N-Hexyl-N-β-(β-chloräthyl-sulfonyl)-äthyl-amin, N-Nonyl-N-β-(β-chloräthyl-sulfonyl)-äthyl-amin, N-Dodecyl-N-β-(β-chloräthyl-sulfonyl)-äthyl-amin, N-Hexadecyl-N-β-(β-chloräthyl-sulfonyl)-äthyl-amin, N-Oktadecyl-N-β-(β-chloräthyl-sulfonyl)-äthyl-amin, N-Carboxymethyl-N-β-(β-bromäthyl-sulfonyl)-äthyl-amin, N-Sulfatomethyl-N-β-(β-chloräthyl-sulfonyl)-äthyl-amin, N-β-Carboxyäthyl-N-γ-(β-chloräthyl-sulfonyl)-propyl-amin, N-β-Sulfatoäthyl-N-γ-(β-chloräthyl-sulfonyl)-propyl-amin, N-β-Sulfatoäthyl-N-δ-(β-chloräthyl-sulfonyl)-butyl-amin, N-β-Äthoxyäthyl-N-δ-(β-chloräthyl-sulfonyl)-butyl-amin, N-γ-Chlorpropyl-N-β-(β-chloräthyl-sulfonyl)-äthyl-amin, N-Phenyl-N-β-(β-chloräthyl-sulfonyl)-äthyl-amin, N-p-Chlorphenyl-N-β-(β-chloräthyl-sulfonyl)-äthyl-amin, N-o-Methylphenyl-N-β-(β-chloräthyl-sulfonyl)-äthyl-amin, N-p-Methoxyphenyl-N-β-(β-chloräthyl-sulfonyl)-äthyl-amin, N-m-Sulfophenyl-N-β-(β-chloräthyl-sulfonyl)-äthyl-amin, N-p-Sulfophenyl-N-β-(β-chloräthyl-sulfonyl)-äthyl-amin, Bis-[β-(β-chloräthyl-sulfonyl)-äthyl]-amin, Bis-[β-(β-bromäthyl-sulfonyl)-äthyl]-amin, Bis-[γ-(β-chloräthyl-sulfonyl)-propyl]-amin, Bis-[δ-(β-chloräthyl-sulfonyl-butyl]-amin, Bis-(β-vinylsulfonyl-äthyl)-amin.

Bevorzugt sind die Amine von niederem Molekulargewicht, wie das β-(β-Chloräthyl-sulfonyl)-äthyl-amin und sein N-Methylderivat. Besonders bevorzugt ist das Bis-[β-(β-chloräthyl-sulfonyl)-äthyl]-amin.

Als Farbstoffe der Formeln (10) und (11) kommen z.B. Farbstoffe der folgenden Strukturgruppen in Betracht:

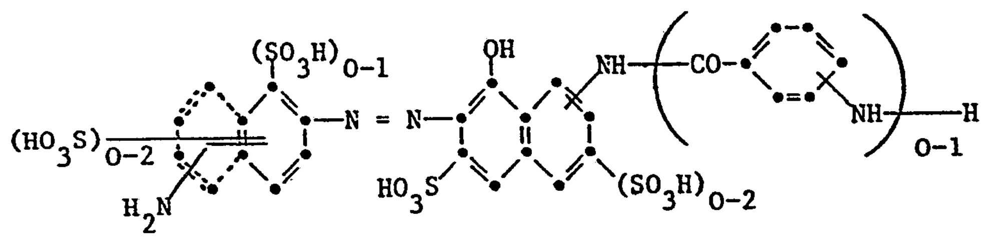

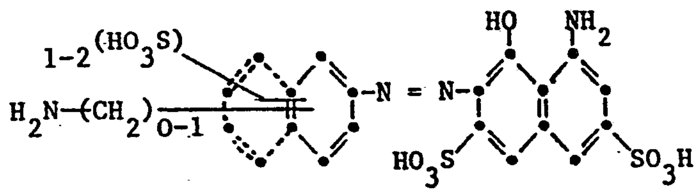

Metallkomplexe von Farbstoffen der Formeln:

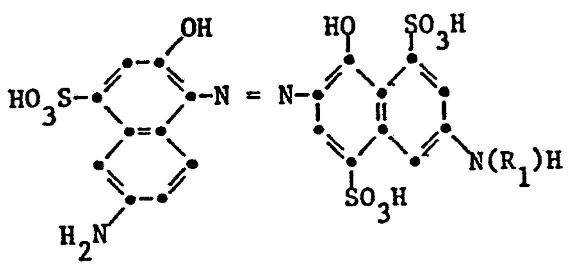

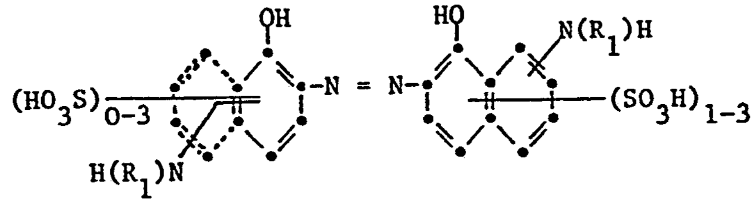

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

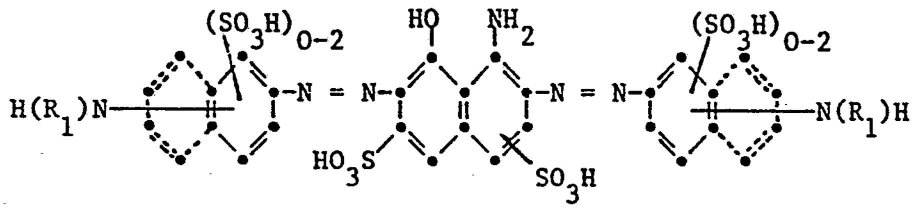

Die durch Strichelungen angedeuteten kondensierten Ringe stehen für alternativ mögliche Naphthalinsysteme.

Die Farbstoffe der oben angegebenen Formeln können in den Alkyl- oder Arylresten weitersubstituiert sein, insbesondere durch die bei der Erläuterung von Formel (1) genannten Substituenten.

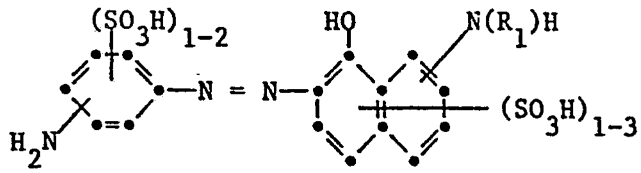

sowie die Metallkomplex-Azofarbstoffe der Formeln

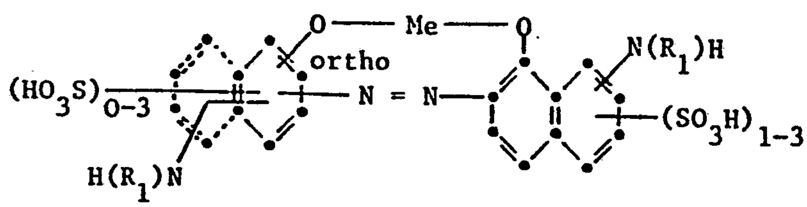

worin Me für Cu, Cr oder Co steht, und

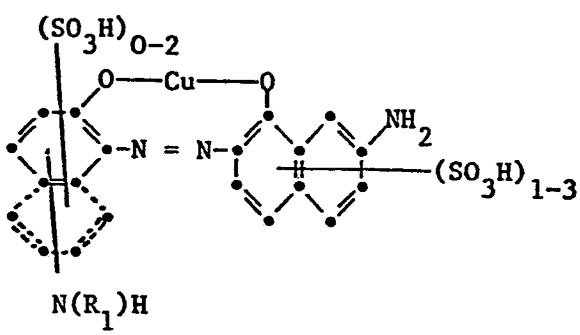

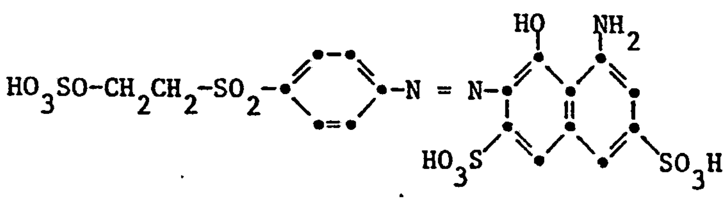

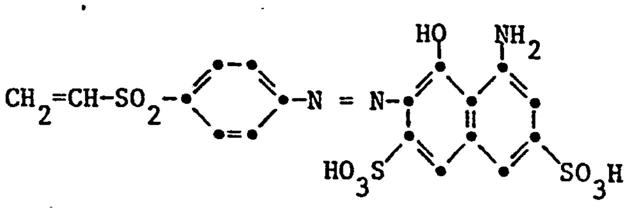

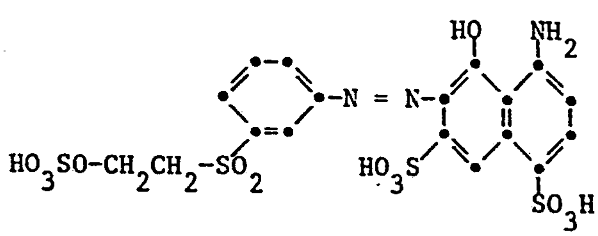

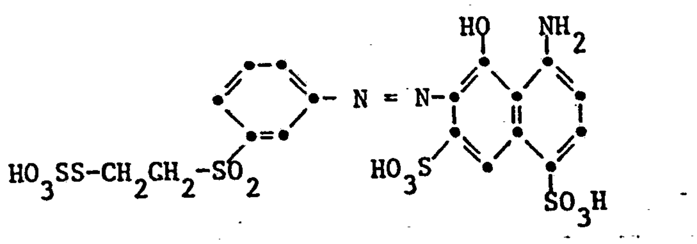

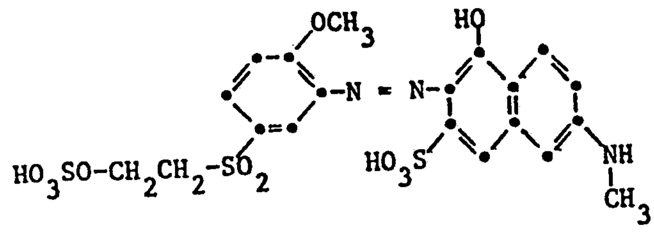

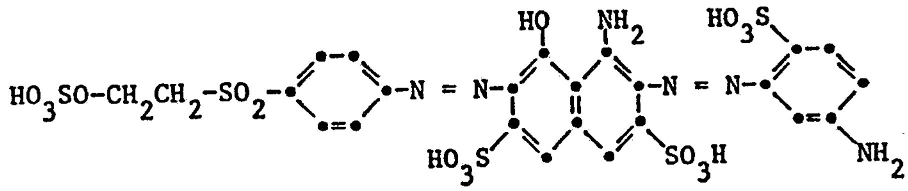

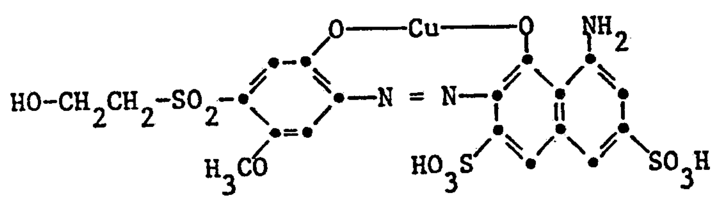

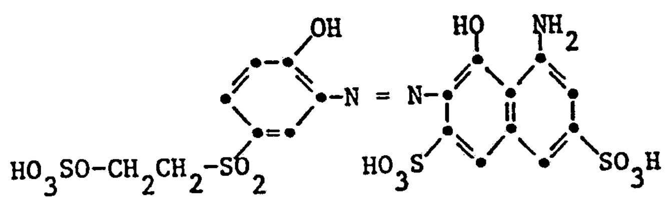

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für

das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergieren wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1

31,9 Teile 1-Amino-8-hydroxynaphthalin-3,6-disulfonsäure werden in 100 Teilen Wasser neutral gelöst. Diese Lösung wird während 10 Minuten zu einer Mischung von 200 Teilen Eis und Wasser, 18,5 Teilen 2,4,6-Trichlor-1,3,5-triazin und 10 Teilen 37%iger Salzsäure getropft. Bis zur vollständigen Kondensation wird der pH der Reaktionsmischung durch ständige Zugabe von 2n Natriumhydroxidlösung bei 1,5 gehalten. Nach Zusatz von 22,9 Teilen β-(β-Chloräthylsulfonyl)-äthylamin-hydrochlorid wird die Temperatur der Reaktionsmischung von 5°C langsam bis auf 20°C erhöht. Dabei wird der pH der Reaktionsmischung durch ständige Zugabe von 2n Natriumhydroxidlösung anfänglich bei 6,5 und dann bei 8,0 gehalten. Nach vollständiger Kondensations- und Eliminierungs-Reaktion wird dieses Farbstoffzwischenprodukt bei 0 bis 10°C und pH 6,0 mit 28,1 Teilen diazotiertem 1-Amino-4-(β-sulfatoäthyl-sulfonyl)-benzol gekuppelt. Nach vollständiger Kupplungsreaktion bei pH 6,5 wird die Reaktionsmischung geklärt und der gebildete Reaktivfarbstoff der Formel

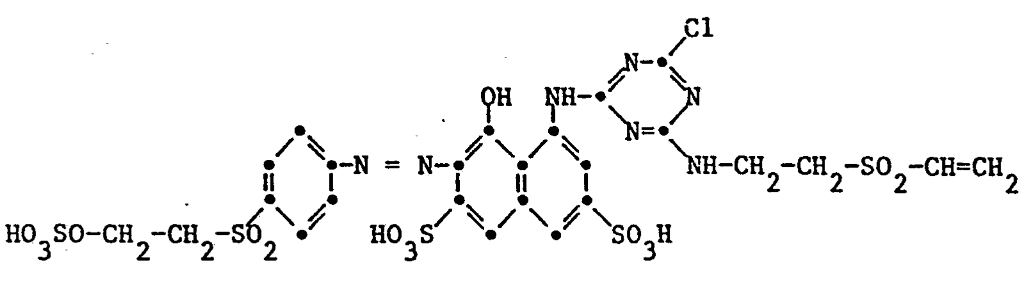

durch Einstreuen von Kaliumchlorid ausgesalzen, filtriert und im Vakuum getrocknet. Er färbt Baumwolle in Rottönen.

Weitere wertvolle Reaktivfarbstoffe, die Baumwolle in den in Tabelle 1, Spalte 4, angegebenen Farbtönen färben, werden erhalten, wenn man gemäss den Angaben in Beispiel 1 1-Amino-8-hydroxynaphthalin-3,6-disulfonsäure zuerst mit 2,4,6-Trichlor-1,3,5-triazin und dann mit der in Spalte 2 angegebenen Amino-Verbindung umsetzt und auf die so erhaltenen Kupplungskomponente die in Spalte 3 angegebene diazotierte Diazokomponente kuppelt.

Gegebenenfalls kann dabei vor der Isolierung des Farbstoffes bei pH 6,5 bis 7,5 eine Eliminierungsreaktion eingefügt werden, indem die Reaktionslösung bei 15 bis 25°C durch ständige Zugabe von 2n Natriumhydroxidlösung bei einem pH von 9,0 bis 10,0 gehalten wird, bis die vollständige Umwandlung durch Chromatographie angezeigt wird.

Tabelle 1

| Nr. | Aminoverbindung | Diazokomponente | Farbton auf Baumwolle |
|---|---|---|---|
| 1 | β-(β-Chloräthylsulfonyl)-äthylamin-hydrochlorid | 1-Amino-3-(β-sulfato-äthylsulfonyl)-benzol | gelbstichig rot |
| 2 | β-(β-Chloräthylsulfonyl)-äthylamin-hydrochlorid | 1-Amino-2-(β-sulfato-äthylsulfonyl)-benzol | rot |
| 3 | β-(β-Chloräthylsulfonyl)-äthylamin-hydrochlorid | 1-Amino-4-allylsulfonyl-benzol | rot |
| 4 | β-(β-Chloräthylsulfonyl)-äthylamin-hydrochlorid | 1-Amino-5-(2,3-dibrompropionyl-amino)-benzol-2-sulfonsäure | gelbstichig rot |
| 5 | β-(β-Chloräthylsulfonyl)-äthylamin-hydrochlorid | 1-Amino-5-(α-bromacryloylamino)-benzol-2-sulfonsäure | gelbstichig rot |
| 6 | β-(β-Chloräthylsulfonyl)-äthylamin-hydrochlorid | 1-Amino-5-(2,3-dichlorpropionylamino)-benzol-2-sulfonsäure | gelbstichig rot |
| 7 | β-(β-Chloräthylsulfonyl)-äthylamin-hydrochlorid | 1-Amino-5-chloracetylamino-benzol-2-sulfonsäure | gelbstichig rot |
| 8 | Bis-(β-(β-chloräthylsulfonyl)-äthyl)-amin-hydrochlorid | 1-Amino-4-(β-sulfato-äthylsulfonyl)-benzol | rot |
| 9 | Bis-(β-(β-chloräthylsulfonyl)-äthyl)-amin-hydrochlorid | 1-Amino-2-(β-sulfato-äthylsulfonyl)-benzol | rot |
| 10 | Bis-(β-(β-chloräthylsulfonyl)-äthyl)-amin-hydrochlorid | 1-Amino-4-allylsulfonyl-benzol | rot |
| 11 | Bis-(β-(β-chloräthylsulfonyl)-äthyl)-amin-hydrochlorid | 1-Amino-5-(2,3-dibromproprionyl-amino)-benzol-2-sulfonsäure | gelbstichig rot |
| 12 | Bis-(β-(β-chloräthylsulfonyl)-äthyl)-amin-hydrochlorid | 1-Amino-5-(2,3-dichlorpropionylamino)-benzol-2-sulfonsäure | gelbstichig rot |
| 13 | Bis-(β-(β-chloräthylsulfonyl)-äthyl)-amin-hydrochlorid | 1-Amino-5-chloracetyl-amino-benzol-2-sulfonsäure | gelbstichig rot |
| 14 | Bis-(β-(β-chloräthylsulfonyl)-äthyl)-amin-hydrochlorid | 1-Amino-3-(β-sulfato-äthylsulfonyl)-benzol | gelbstichig rot |
| 15 | 3-(β-Chloräthylsulfonyl)-propylamin-hydrochlorid | 1-Amino-4-(β-sulfato-äthylsulfonyl)-benzol | rot |
| 16 | 3-(β-Chloräthylsulfonyl)-propylamin-hydrochlorid | 1-Amino-3-(β-sulfato-äthylsulfonyl)-benzol | gelbstichig rot |
| 17 | 3-(β-Chloräthylsulfonyl)-propylamin-hydrochlorid | 1-Amino-2-(β-sulfato-äthylsulfonyl)-benzol | rot |
| 18 | 3-(β-Chloräthylsulfonyl)-propylamin-hydrochlorid | 1-Amino-5-(2,3-dibrompropionyl-amino)-benzol-2-sulfonsäure | gelbstichig rot |
| 19 | 4-(β-Chloräthylsulfonyl)-butylamin-hydrochlorid | 1-Amino-4-(β-sulfato-äthylsulfonyl)-benzol | rot |
| 20 | 4-(β-Chloräthylsulfonyl)-butylamin-hydrochlorid | 1-Amino-3-(β-sulfato-äthylsulfonyl)-benzol | gelbstichig |
| 21 | 4-(β-Chloräthylsulfonyl)-butylamin-hydrochlorid | 1-Amino-2-(β-sulfato-äthylsulfonyl)-benzol | rot |
| 22 | 4-(β-Chloräthylsulfonyl)-butylamin-hydrochlorid | 1-Amino-5-(2,3-dibrompropionyl-amino)-benzol-2-sulfonsäure | gelbstichig rot |
| 23 | β-(β-Chloräthylsulfonyl)-äthylamin-hydrochlorid | 1-Amino-5-(4-(β-chloräthylsulfonyl)-butyrylamino)-benzol-2-sulfonsäure | gelbstichig |
| 24 | Bis-(β-(β-chloräthylsulfonyl)-äthyl)-amin-hydrochlorid | 1-Amino-5-(4-(β-chloräthylsulfonyl)-butyrylamino)-benzol-2-sulfonsäure | gelbstichig rot |

Beispiel 2

31,9 Teile 1-Amino-8-hydroxynaphthalin-3,6-disulfonsäure werden in 100 Teilen Wasser neutral gelöst. Diese Lösung wird während 10 Minuten zu einer Mischung von 200 Teilen Eis und Wasser, 18,5 Teilen 2,4,6-Trichlor-1,3,5-triazin und 10 Teilen 37%iger Salzsäure getropft. Bis zur vollständigen Kondensation wird der pH der Reaktionsmischung durch ständige Zugabe von 2n Natriumhydroxidlösung bei 1,5 gehalten.

Dieses Zwischenprodukt wird bei 0 bis 10°C und pH 1,0 mit 28,1 Teilen diazotiertem 1-Amino-4-(β-sulfatoäthyl-sulfonyl)-benzol gekuppelt. Nach vollständiger Kupplungsreaktion bei pH 6,5 wird der pH der Reaktionslösung auf 8,0 erhöht.

Nach Zusatz von 22,9 Teilen β-(β-Chloräthylsulfonyl)-äthylamin-hydrochlorid wird die Temperatur der Reaktionsmischung von 5°C langsam bis auf 20°C erhöht. Dabei wird der pH der Reaktionsmischung durch ständige Zugabe von 2n Natriumhydroxidlösung anfänglich bei 6,5 und dann bei 8,0 gehalten. Nach vollständiger Kondensations- und Eliminierungs-Reaktion bei pH 10,0 und 20°C wird der gebildete Reaktivfarbstoff der Formel

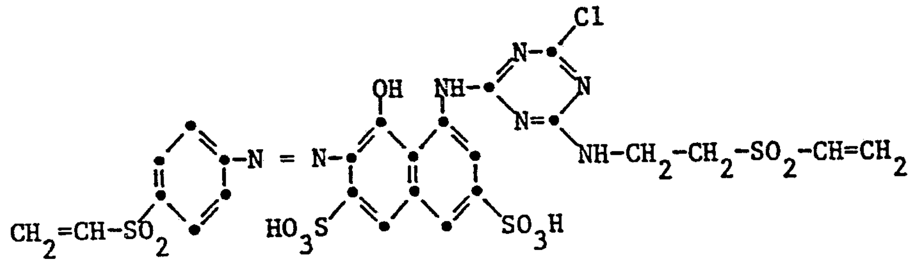

durch Einstreuen von Kaliumchlorid bei pH 7,0 ausgesalzen, filtriert und im Vakuum getrocknet. Er färbt Baumwolle in Rottönen.

Die Farbstoffe in Tabelle 1 könne auch analog dieser Herstellungsvariante synthetisiert werden.

Beispiel 3

16,0 Teile 1-Amino-8-hydroxynaphthalin-3,6-disulfonsäure werden in 400 ml Wasser neutral gelöst und die Lösung auf 0 bis 5°C abgekühlt. Bei dieser Temperatur und pH 4,5 werden 7,1 Teile 2,4,6-Trifluor-1,3,5-triazin innert 15 Minuten zugetropft, wobei der pH der Reaktionslösung durch gleichzeitige Zugabe von 2n Natriumhydroxidlösung schwach kongosauer gehalten wird. Nach Zusatz von 11,4 Teilen β-(β-Chloräthylsulfonyl)-äthylamin-hydrochlorid wird der pH der Reaktionsmischung durch ständige Zugabe von 2n Natriumhydroxidlösung zuerst kurze Zeit bei 6,0 und dann bei 8,0 gehalten. Dabei wird die Temperatur innert 2 bis 3 Stunden auf 20 bis 25°C erhöht. Nach vollständiger Kondensations- und Eliminierungsreaktion wird dieses Farbstoffzwischenprodukt bis 0 bis 10°C und pH 6,0 mit 14,1 Teilen diazotiertem 1-Amino-4-(β-sulfatoäthyl-sulfonyl)-benzol gekuppelt. Nach vollständiger Kupplungsreaktion bei pH 6,5 wird die Reaktionsmischung bei 20°C durch ständige Zugabe von 2n Natriumhydroxidlösung bei einem pH von 9,0 gehalten, bis die vollständige Eliminierung durch Chromatographie angezeigt wird. Danach wird die Reaktionsmischung bei pH 6,5 geklärt und der gebildete Reaktivfarbstoff der Formel

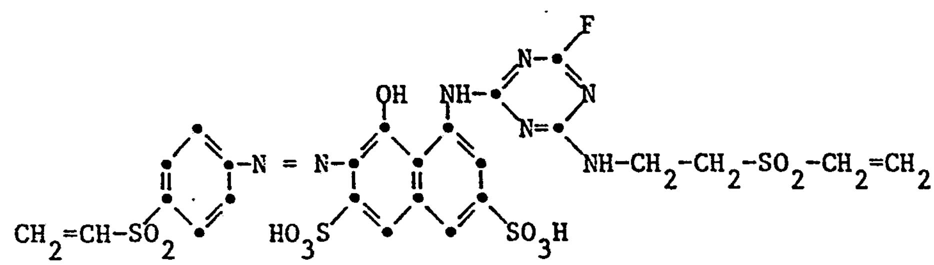

durch Einstreuen von Natriumchlorid ausgesalzen, filtriert und im Vakuum getrocknet. Er färbt Baumwolle in Rottönen.

Weitere wertvolle Reaktivfarbstoffe, die Baumwolle in den in Tabelle 2, Spalte 4, angegebenen Farbtönen färben, werden erhalten, wenn man gemäss den Angaben in Beispiel 3 1-Amino-8-hydroxynaphthalin-3,6-disulfonsäure zuerst mit 2,4,6-Trifluor-1,3,5-triazin und dann mit der in Spalte 2 angegebenen Aminoverbindung umsetzt und auf die so erhaltene Kupplungskomponente die in Spalte 3 angegebene diazotierte Diazokomponente kuppelt. Dabei wird nicht in jedem Fall, wie das in Beispiel 3 beschrieben ist, nach der Kupplungsreaktion noch eine Eliminierungsreaktion angefügt.

Tabelle 2

| Nr. | Aminoverbindung | Diazokomponente | Farbton auf Baumwolle |
|---|---|---|---|
| 1 | β-(β-Chloräthylsulfonyl)-äthylamin-hydrochlorid | 1-Amino-3-(β-sulfato-äthylsulfonyl)-benzol | gelbstichig rot |
| 2 | β-(β-Chloräthylsulfonyl)-äthylamin-hydrochlorid | 1-Amino-2-(β-sulfato-äthylsulfonyl)-benzol | rot |
| 3 | β-(β-Chloräthylsulfonyl)-äthylamin-hydrochlorid | 1-Amino-4-allylsulfonyl-benzol | rot |
| 4 | β-(β-Chloräthylsulfonyl)-äthylamin-hydrochlorid | 1-Amino-5-(2,3-dibrom-propionyl-amino)-benzol-2-sulfonsäure | gelbstichig rot |
| 5 | Bis-(β-(β-chloräthylsulfonyl)-äthyl)-aminhydrochlorid | 1-Amino-4-(β-sulfato-äthylsulfonyl)-benzol | rot |
| 6 | Bis-(β-(β-chloräthylsulfonyl)-äthyl)-aminhydrochlorid | 1-Amino-2-(β-sulfato-äthylsulfonyl)-benzol | rot |
| 7 | Bis-(β-(β-chloräthylsulfonyl)-äthyl)-aminhydrochlorid | 1-Amino-4-allylsulfonyl-benzol | rot |
| 8 | Bis-(β-(β-chloräthylsulfonyl)-äthyl)-aminhydrochlorid | 1-Amino-5-(2,3-dibrompropionyl-amino)-benzol-2-sulfonsäure | gelbstichig rot |
| 9 | Bis-(β-(β-chloräthylsulfonyl)-äthyl)-aminhydrochlorid | 1-Amino-3-(β-sulfato-äthylsulfonyl)-benzol | gelbstichig rot |
| 10 | 3-(β-Chloräthylsulfonyl)-propylamin-hydrochlorid | 1-Amino-4-(β-sulfato-äthylsulfonyl)-benzol | rot |
| 11 | 3-(β-Chloräthylsulfonyl)-propylamin-hydrochlorid | 1-Amino-3-(β-sulfato-äthylsulfonyl)-benzol | gelbstichig rot |
| 12 | 3-(β-Chloräthylsulfonyl)-propylamin-hydrochlorid | 1-Amino-2-(β-sulfato-äthlsulfonyl)-benzol | rot |
| 13 | 3-(β-Chloräthylsulfonyl)-propylamin-hydrochlorid | 1-Amino-5-(2,3-dibrompropionyl-amino)-benzol-2-sulfonsäure | gelbstichig rot |
| 14 | 4-(β-Chloräthylsulfonyl)-butylamin-hydrochlorid | 1-Amino-4-(β-sulfato-äthylsulfonyl)-benzol | rot |
| 15 | 4-(β-Chloräthylsulfonyl)-butylamin-hydrochlorid | 1-Amino-3-(β-sulfato-äthylsulfonyl)-benzol | gelbstichig rot |
| 16 | 4-(β-Chloräthylsulfonyl)-butylamin-hydrochlorid | 1-Amino-2-(β-sulfato-äthylsulfonyl)-benzol | rot |
| 17 | 4-(β-Chloräthylsulfonyl)-butylamin-hydrochlorid | 1-Amino-5-(2,3-dibrompropionyl-amino)-benzol-2-sulfonsäure | gelbstichig rot |
| 18 | β-(β-Chloräthylsulfonyl)-äthylamin-hydrochlorid | 1-Amino-5-(4-(β-chloräthylsulfonyl)-butyrylamino)-benzol-2-sulfonsäure | gelbstichig rot |
| 19 | Bis-(β-(β-chloräthylsulfonyl)-äthyl)-amin-hydrochlorid | 1-Amino-5-(4-(β-chloräthylsulfonyl)-butyrylamino)-benzol-2-sulfonsäure | gelbstichig rot |

Beispiel 4:

Zu 76,5 Teilen in der in 600 Teilen Wasser gelösten Kupplungskomponente der Formel

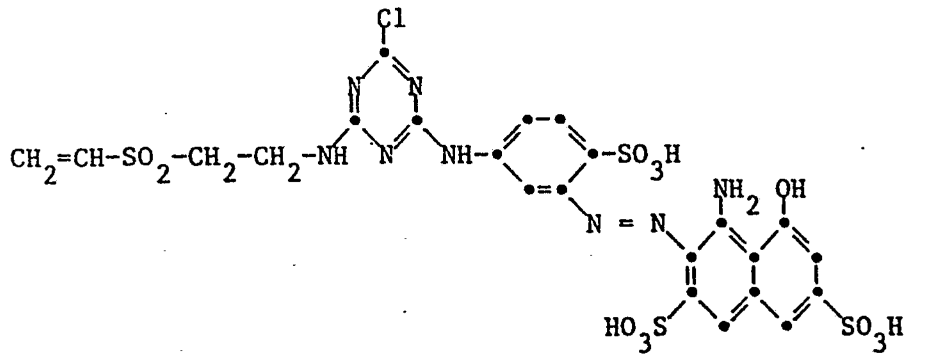

(hergestellt durch saure Kupplung von diazotiertem 2-(3′-Amino-4′-sulfophenylamino)-4-chlor-6-(β-vinylsulfonyl-äthylamino)-1,3,5-triazin, Herstellung nachfolgend beschrieben, auf 1-Amino-8-hydroxynaphthalin-3,6-disulfonsäure) wird bei 0 bis 5°C eine Mischung von 28,1 Teilen diazotiertem 1-Amino-4-(β-sulfatoäthyl-sulfonyl)-benzol und 300 Teilen Wasser gegeben. Nach vollständiger Kupplungsreaktion bei pH 6,5 wird die Reaktionsmischung bei 20°C durch ständige Zugabe von 2n Natriumhydroxidlösung bei einem pH von 10,0 gehalten, bis die vollständige Eliminierung durch Chromatographie angezeigt wird. Danach wird die Reaktionsmischung bei pH 6,5 geklärt und der gebildete Farbstoff der Formel

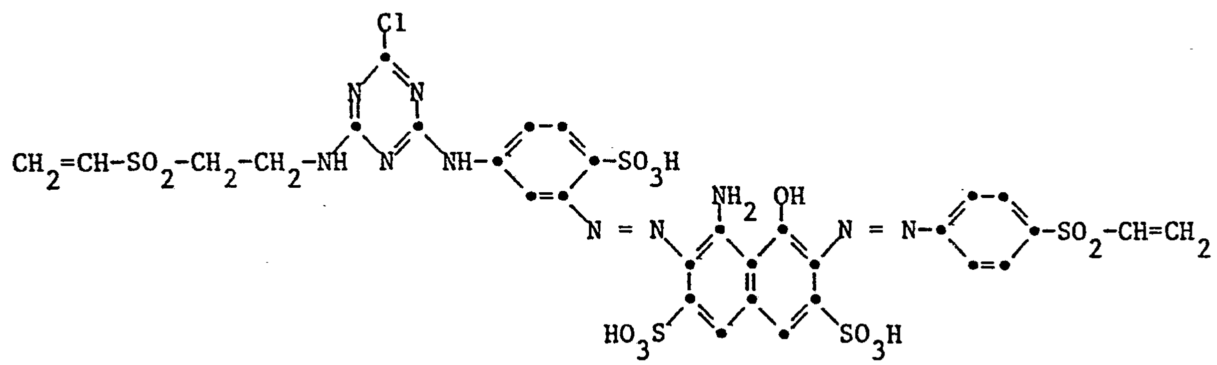

durch Einstreuen von Natriumchlorid ausgesalzen, filtriert und im Vakuum getrocknet. Er färbt Baumwolle in grünstichigen Blautönen.

Herstellung von 2-(3′-Amino-4′-sulfophenylamino)-4-chlor-6-(β-vinyl-sulfonyl-äthylamino)-1,3,5-triazin

18,8 Teile 1,3-Diaminobenzol-4-sulfonsäure werden in 100 Teilen Wasser neutral gelöst. Diese Lösung wird während 10 Minuten zu einer Mischung von 200 Teilen Eis und Wasser, 18,5 Teilen 2,4,6-Trichlor-1,3,5-triazin und 10 Teilen 37%iger Salzsäure getropft. Bis zur vollständigen Kondensation wird der pH der Reaktionsmischung durch ständige Zugabe von 2n Natriumhydroxidlösung bei 1,5 gehalten. Nach Zusatz von 22,9 Teilen β-(β-Chloräthylsulfonyl)-äthylamin-hydrochlorid wird die Temperatur der Reaktionsmischung von 5°C langsam bis auf 20°C erhöht. Dabei wird der pH der Reaktionsmischung durch ständige Zugabe von 2n Natriumhydroxidlösung anfänglich bei 6,5 und dann bei 8,0 gehalten. Nach vollständiger Kondensations- und Eliminierungs-Reaktion wird diese Reaktionsmischung direkt für die saure Kupplung in Beispiel 4 eingesetzt.

Weitere wertvolle Reaktivfarbstoffe, die Baumwolle in den in Tabelle 3, Spalte 4, angegebenen Farbtönen färben, werden erhalten, wenn man gemäss den Angaben in Beispiel 4 die in Spalte 2 angegebene diazotierte Diazokomponente sauer auf die 1-Amino-8-hydroxynaphthalin-3,6-disulfonsäure kuppelt, und auf die so erhaltene Monoazoverbindung die in Spalte 3 angegebene diazotierte Diazokomponente kuppelt. Dabei wird nicht in jedem Fall, wie das in Beispiel 4 beschrieben ist, nach der Kupplungsreaktion noch eine Eliminierungsreaktion angefügt.

Tabelle 3

| Nr. | Diazokomponente | Diazokomponente | Farbton auf Baumwolle |
|---|---|---|---|
| 1 | 1-Amino-4-(β-sulfato-äthylsulfonyl)-benzol | 2-(3′-Amino-4′-sulfophenylamino)-4-chlor-6-(β-vinylsulfonyl-äthylamino)-1,3,5-triazin | marineblau |

Tabelle 3 (Fortsetzung)

| Nr. | Diazokomponente | Diazokomponente | Farbton auf Baumwolle |
|---|---|---|---|
| 2 | 1-Amino-4-(β-sulfato-äthylsulfonyl)-benzol | 2-(3'-Amino-4',6'-disulfophenylamino)-4-chlor-6-(β-vinylsulfonyl-äthylamino)-1,3,5-triazin | marineblau |
| 3 | 1-Amino-4-(β-sulfato-äthylsulfonyl)-benzol | 2-(4'-Amino-2',5'-disulfophenylamino)-4-chlor-6-(β-vinylsulfonyl-äthylamino)-1,3,5-triazin | grünstichig blau |
| 4 | 1-Amino-4-(β-sulfato-äthylsulfonyl)-benzol | 2-(3'-Amino-4',6'-disulfophenylamino)--4-chlor-6-(β-(β-chloräthylsulfonyl-äthylamino)-1,3,5-triazin | marineblau |
| 5 | 1-Amino-4-(β-sulfato-äthylsulfonyl)-benzol | 2-(3'-Amino-4'-sulfophenylamino)-4-chlor-6-(bis-(β-vinylsulfonyl-äthyl)-amino)-1,3,5-triazin | marineblau |
| 6 | 1-Amino-4-(β-sulfato-äthylsulfonyl)-benzol | 2-(3'-Amino-4'-sulfophenylamino)-4-fluor-6-(β-vinylsulfonyl-äthylamino)-1,3,5-triazin | marineblau |
| 7 | 1-Amino-4-(β-sulfato-äthylsulfonyl)-benzol | 2-(3'-Amino-4',6'-disulfophenylamino)-4-fluor-6-(β-vinylsulfonyl-äthylamino)-1,3,5-triazin | marineblau |
| 8 | 1-Amino-4-(β-sulfato-äthylsulfonyl)-benzol | 2-(4'-Amino-2',5'-disulfophenylamino)-4-fluor-6-(β-vinylsulfonyl-äthylamino)-1,3,5-triazin | grünstichig blau |
| 9 | 1-Amino-4-(β-sulfato-äthylsulfonyl)-benzol | 2-(3'-Amino-4',6'-disulfophenylamino)--4-fluor-6-(β-(β-chloräthylsulfonyl)-äthylamino)-1,3,5-triazin | marineblau |
| 10 | 1-Amino-4-(β-sulfato-äthylsulfonyl)-benzol | 2-(3'-Amino-4'-sulfophenylamino)-4-fluor-6-(bis-(β-vinylsulfonyl-äthyl)-amino)-1,3,5-triazin | marineblau |
| 11 | 1-Amino-3-(β-sulfato-äthylsulfonyl)-benzol | 2-(3'-Amino-4'-sulfophenylamino)-4-chlor-6-(β-vinylsulfonyl-äthylamino)-1,3,5-triazin | marineblau |
| 12 | 1-Amino-3-(β-sulfato-äthylsulfonyl)-benzol | 2-(3'-Amino-4',6'-disulfophenylamino)-4-chlor-6-(β-vinylsulfonyl-äthylamino)-1,3,5-triazin | marineblau |
| 13 | 1-Amino-3-(β-sulfato-äthylsulfonyl)-benzol | 2-(4'-Amino-2',5'-disulfophenylamino)-4-chlor-6-(β-vinylsulfonyl-äthylamino)-1,3,5-triazin | grünstichig blau |
| 14 | 1-Amino-3-(β-sulfato-äthylsulfonyl)-benzol | 2-(3'-Amino-4',6'-disulfophenylamino)--4-chlor-6-(β-(β-chloräthylsulfonyl)-äthylamino)-1,3,5-triazin | marineblau |
| 15 | 1-Amino-3-(β-sulfato-äthylsulfonyl)-benzol | 2-(3'-Amino-4'-sulfophenylamino)-4-chlor-6-(bis-(β-vinylsulfonyl-äthyl)-amino)-1,3,5-triazin | marineblau |
| 16 | 1-Amino-3-(β-sulfato-äthylsulfonyl)-benzol | 2-(3'-Amino-4'-sulfophenylamino)-4-fluor-6-(β-vinylsulfonyl-äthylamino)-1,3,5-triazin | marineblau |
| 17 | 1-Amino-3-(β-sulfato-äthylsulfonyl)-benzol | 2-(3'-Amino-4',6'-disulfophenylamino)-4-fluor-6-(β-vinylsulfonyl-äthylamino)-1,3,5-triazin | marineblau |
| 18 | 1-Amino-3-(β-sulfato-äthylsulfonyl)-benzol | 2-(4'-Amino-2',5'-disulfophenylamino)-4-fluor-6-(β-vinylsulfonyl-äthylamino)-1,3,5-triazin | grünstichig blau |

Tabelle 3 (Fortsetzung)

| Nr. | Diazokomponente | Diazokomponente | Farbton auf Baumwolle |
|---|---|---|---|
| 19 | 1-Amino-3-(β-sulfato-äthylsulfonyl)-benzol | 2-(3'-Amino-4',6'-disulfophenylamino)--4-fluor-6-(β-(β-chloräthylsulfonyl)-äthylamino)-1,3,5-triazin | marineblau |
| 20 | 1-Amino-3-(β-sulfato-äthylsulfonyl)-benzol | 2-(3'-Amino-4'-sulfophenylamino)-4-fluor-6-(bis-(β-vinylsulfonyl-äthyl)-amino)-1,3,5-triazin | marineblau |
| 21 | 1-Amino-2-(β-sulfato-äthylsulfonyl)-benzol | 2-(3'-Amino-4'-sulfophenylamino)-4-chlor-6-(β-vinylsulfonyl-äthylamino)-1,3,5-triazin | marineblau |
| 22 | 1-Amino-2-(β-sulfato-äthylsulfonyl)-benzol | 2-(3'-Amino-4',6'-disulfophenylamino)-4-chlor-6-(β-vinylsulfonyl-äthylamino)-1,3,5-triazin | marineblau |
| 23 | 1-Amino-2-(β-sulfato-äthylsulfonyl)-benzol | 2-(4'-Amino-2',5'-disulfophenylamino)-4-chlor-6-(β-vinylsulfonyl-äthylamino)-1,3,5-triazin | grünstichig blau |
| 24 | 1-Amino-2-(β-sulfato-äthylsulfonyl)-benzol | 2-(3'-Amino-4',6'-disulfophenylamino)--4-chlor-6-(β-(β-chloräthylsulfonyl)-äthylamino)-1,3,5-triazin | marineblau |
| 25 | 1-Amino-2-(β-sulfato-äthylsulfonyl)-benzol | 2-(3'-Amino-4'-sulfophenylamino)-4-chlor-6-(bis-(β-vinylsulfonyl-äthyl)-amino)-1,3,5-triazin | marineblau |
| 26 | 1-Amino-2-(β-sulfato-äthylsulfonyl)-benzol | 2-(3'-Amino-4'-sulfophenylamino)-4-chlor-6-(β-vinylsulfonyl-äthylamino)-1,3,5-triazin | marineblau |
| 27 | 1-Amino-2-(β-sulfato-äthylsulfonyl)-benzol | 2-(3'-Amino-4',6'-disulfophenylamino)-4-fluor-6-(β-vinylsulfonyl-äthylamino)-1,3,5-triazin | marineblau |
| 28 | 1-Amino-2-(β-sulfato-äthylsulfonyl)-benzol | 2-(4'-Amino-2',5'-disulfophenylamino)-4-fluor-6-(β-vinylsulfonyl-äthylamino)-1,3,5-triazin | grünstichig blau |
| 29 | 1-Amino-2-(β-sulfato-äthylsulfonyl)-benzol | 2-(3'-Amino-4',6'-(β-disulfophenyl-amino)-4-fluor-6-(β-(β-chloräthyl-sulfonyl)-äthylamino)-1,3,5-triazin | marineblau |
| 30 | 1-Amino-2-(β-sulfato-äthylsulfonyl)-benzol | 2-(3'-Amino-4'-sulfophenylamino)-4-fluor-6-(bis-(β-vinylsulfonyl-äthyl)-amino)-1,3,5-triazin | marineblau |
| 31 | 1-Amino-4-allylsulfonyl-benzol | 2-(3'-Amino-4'-sulfophenylamino)-4-chlor-6-(β-vinylsulfonyl-äthylamino)-1,3,5-triazin | marineblau |
| 32 | 1-Amino-4-allylsulfonyl-benzol | 2-(3'-Amino-4',6'-disulfophenylamino)-4-chlor-6-(β-vinylsulfonyl-äthylamino)-1,3,5-triazin | marineblau |
| 33 | 1-Amino-4-allylsulfonyl-benzol | 2-(4'-Amino-2',5'-disulfophenylamino)-4-chlor-6-(β-vinylsulfonyl-äthylamino)-1,3,5-triazin | grünstichig blau |
| 34 | 1-Amino-4-allylsulfonyl-benzol | 2-(3'-Amino-4',6'-disulfophenylamino)--4-chlor-6-(β-(β-chloräthylsulfonyl)-äthylamino)-1,3,5-triazin | marineblau |
| 35 | 1-Amino-4-allylsulfonyl-benzol | 2-(3'-Amino-4'-sulfophenylamino)-4-chlor-6-(bis-(β-vinylsulfonyläthyl)-amino)-1,3,5-triazin | marineblau |

Tabelle 3 (Fortsetzung)

| Nr. | Diazokomponente | Diazokomponente | Farbton auf Baumwolle |
|---|---|---|---|
| 36 | 1-Amino-4-allylsulfonyl-benzol | 2-(3'-Amino-4'-sulfophenylamino)-4-fluor-6-(β-vinylsulfonyl-äthylamino)-1,3,5-triazin | marineblau |
| 37 | 1-Amino-4-allylsulfonyl-benzol | 2-(3'-Amino-4',6'-disulfophenylamino)-4-fluor-6-(β-vinylsulfonyl-äthylamino)-1,3,5-triazin | marineblau |
| 38 | 1-Amino-4-allylsulfonyl-benzol | 2-(4'-Amino-2',5'-disulfophenylamino)-4-fluor-6-(β-vinylsulfonyl-äthylamino)-1,3,5-triazin | grünstichig blau |
| 39 | 1-Amino-4-allylsulfonyl-benzol | 2-(3'-Amino-4',6'-disulfophenylamino)--4-fluor-6-(β-(β-chloräthylsulfonyl)-äthylamino)-1,3,5-triazin | marineblau |
| 40 | 1-Amino-4-allylsulfonyl-benzol | 2-(3'-Amino-4'-sulfophenylamino)-4-fluor-6-(bis-(β-vinylsulfonyl-äthyl)-amino)-1,3,5-triazin | marineblau |
| 41 | 1-Amino-5-(2,3-dibrompropionyl-amino)-benzol-2-sulfonsäure | 2-(3'-Amino-4'-sulfophenylamino)-4-chlor-6-(β-vinylsulfonyl-äthylamino)-1,3,5-triazin | marineblau |
| 42 | 1-Amino-5-(2,3-dibrompropionyl-amino)-benzol-2-sulfonsäure | 2-(3'-Amino-4',6'-disulfophenylamino)-4-chlor-6-(β-vinylsulfonyl-äthylamino)-1,3,5-triazin | marineblau |
| 43 | 1-Amino-5-(2,3-dibrompropionyl-amino)-benzol-2-sulfonsäure | 2-(4'-Amino-2',5'-disulfophenylamino)-4-chlor-6-(β-vinylsulfonyl-äthylamino)-1,3,5-triazin | grünstichig blau |
| 44 | 1-Amino-5-(2,3-dibrompropionyl-amino)-benzol-2-sulfonsäure | 2-(3'-Amino-4',6'-disulfophenylamino)--4-chlor-6-(β-(β-chloräthylsulfonyl)--äthylamino)-1,3,5-triazin | marineblau |
| 45 | 1-Amino-5-(2,3-dibrompropionyl-amino)-benzol-2-sulfonsäure | 2-(3'-Amino-4'-sulfophenylamino)-4-chlor-6-(bis-(β-vinylsulfonyl-äthyl)-amino)-1,3,5-triazin | marineblau |
| 46 | 1-Amino-5-(2,3-dibrompropionyl-amino)-benzol-2-sulfonsäure | 2-(3'-Amino-4'-sulfophenylamino)-4-fluor-6-(β-vinylsulfonyl-äthylamino)-1,3,5-triazin | marineblau |
| 47 | 1-Amino-5-(2,3-dibrompropionyl-amino)-benzol-2-sulfonsäure | 2-(3'-Amino-4',6'-disulfophenylamino)-4-fluor-6-(β-vinylsulfonyl-äthylamino)-1,3,5-triazin | marineblau |
| 48 | 1-Amino-5-(2,3-dibrompropionyl-amino)-benzol-2-sulfonsäure | 2-(4'-Amino-2',5'-disulfophenylamino)-4-fluor-6-(β-vinylsulfonyl-äthylamino)-1,3,5-triazin | grünstichig blau |
| 49 | 1-Amino-5-(2,3-dibrompropionyl-amino)-benzol-2-sulfonsäure | 2-(3'-Amino-4',6'-disulfophenylamino)--4-fluor-6-(β-(β-chloräthylsulfonyl)-äthylamino)-1,3,5-triazin | marineblau |
| 50 | 1-Amino-5-(2,3-dibrompropionyl-amino)-benzol-2-sulfonsäure | 2-(3'-Amino-4'-sulfophenylamino)-4-fluor-6-(bis-(β-vinylsulfonyl-äthyl)-amino)-1,3,5-triazin | marineblau |
| 51 | 1-Amino-5-(α-bromacryloylamino)-benzol-2-sulfonsäure | 2-(3'-Amino-4'-sulfophenylamino)-4-chlor-6-(β-vinylsulfonyl-äthylamino)-1,3,5-triazin | marineblau |
| 52 | 1-Amino-5-(α-bromacryloylamino)-benzol-2-sulfonsäure | 2-(3'-Amino-4',6'-disulfophenylamino)-4-chlor-6-(β-vinylsulfonyl-äthylamino)-1,3,5-triazin | marineblau |

Tabelle 3 (Fortsetzung)

| Nr. | Diazokomponente | Diazokomponente | Farbton auf Baumwolle |
|---|---|---|---|
| 53 | 1-Amino-5-(α-bromacryloylamino)-benzol-2-sulfonsäure | 2-(4'-Amino-2',5'-disulfophenylamino)-4-chlor-6-(β-vinylsulfonyl-äthylamino)-1,3,5-triazin | grünstichig blau |
| 54 | 1-Amino-5-(α-bromacryloylamino)-benzol-2-sulfonsäure | 2-(3'-Amino-4',6'-disulfophenylamino)--4-chlor-6-(β-(β-chloräthylsulfonyl)-äthylamino)-1,3,5-triazin | marineblau |
| 55 | 1-Amino-5-(α-bromacryloylamino)-benzol-2-sulfonsäure | 2-(3'-Amino-4'-sulfophenylamino)-4-chlor-6-(bis-(β-vinylsulfonyl-äthyl)-amino)-1,3,5-triazin | marineblau |
| 56 | 1-Amino-5-(α-bromacryloylamino)-benzol-2-sulfonsäure | 2-(3'-Amino-4'-sulfophenylamino)-4-fluor-6-(β-vinylsulfonyl-äthylamino)-1,3,5-triazin | marineblau |
| 57 | 1-Amino-5-(α-bromacryloylamino)-benzol-2-sulfonsäure | 2-(3'-Amino-4',6'-disulfophenylamino)-4-fluor-6-(β-vinylsulfonyl-äthylamino)-1,3,5-triazin | marineblau |
| 58 | 1-Amino-5-(α-bromacryloylamino)-benzol-2-sulfonsäure | 2-(4'-Amino-2',5'-disulfophenylamino)-4-fluor-6-(β-vinylsulfonyl-äthylamino)-1,3,5-triazin | grünstichig blau |
| 59 | 1-Amino-5-(α-bromacryloylamino)-benzol-2-sulfonsäure | 2-(3'-Amino-4',6'-disulfophenylamino)--4-fluor-6-(β-(β-chloräthylsulfonyl)-äthylamino)-1,3,5-triazin | marineblau |
| 60 | 1-Amino-5-(α-bromacryloylamino)-benzol-2-sulfonsäure | 2-(3'-Amino-4'-sulfophenylamino)-4-fluor-6-(bis-(β-vinylsulfonyl-äthyl)-amino)-1,3,5-triazin | marineblau |
| 61 | 1-Amino-5-(2,3-dichlor-propionyl-amino)-benzol-2-sulfonsäure | 2-(3'-Amino-4'-sulfophenylamino)-4-chlor-6-(β-vinylsulfonyl-äthylamino)-1,3,5-triazin | marineblau |
| 62 | 1-Amino-5-(2,3-dichlor-propionyl-amino)-benzol-2-sulfonsäure | 2-(3'-Amino-4',6'-disulfophenylamino)-4-chlor-6-(β-vinylsulfonyl-äthylamino)-1,3,5-triazin | marineblau |
| 63 | 1-Amino-5-(2,3-dichlor-propionyl-amino)-benzol-2-sulfonsäure | 2-(4'-Amino-2',5'-disulfophenylamino)-4-chlor-6-(β-vinylsulfonyl-äthylamino)-1,3,5-triazin | grünstichig blau |
| 64 | 1-Amino-5-(2,3-dichlor-propionyl-amino)-benzol-2-sulfonsäure | 2-(3'-Amino-4',6'-disulfophenylamino)--4-chlor-6-(β-(β-chloräthylsulfonyl)--äthylamino)-1,3,5-triazin | marineblau |
| 65 | 1-Amino-5-(2,3-dichlor-propionyl-amino)-benzol-2-sulfonsäure | 2-(3'-Amino-4'-sulfophenylamino)-4-chlor-6-(bis-(β-vinylsulfonyl-äthyl)-amino)-1,3,5-triazin | marineblau |
| 66 | 1-Amino-5-(2,3-dichlor-propionyl-amino)-benzol-2-sulfonsäure | 2-(3'-Amino-4'-sulfophenylamino)-4-fluor-6-(β-vinylsulfonyl-äthylamino)-1,3,5-triazin | marineblau |
| 67 | 1-Amino-5-(2,3-dichlor-propionyl-amino)-benzol-2-sulfonsäure | 2-(3'-Amino-4',6'-disulfophenylamino)-4-fluor-6-(β-vinylsulfonyl-äthylamino)-1,3,5-triazin | marineblau |
| 68 | 1-Amino-5-(2,3-dichlor-propionyl-amino)-benzol-2-sulfonsäure | 2-(4'-Amino-2',5'-disulfophenylamino)-4-fluor-6-(β-vinylsulfonyl-äthylamino)-1,3,5-triazin | grünstichig blau |
| 69 | 1-Amino-5-(2,3-dichlor-propionyl-amino)-benzol-2-sulfonsäure | 2-(3'-Amino-4',6'-disulfophenylamino)--4-fluor-6-(β-(β-chloräthylsulfonyl)-äthylamino)-1,3,5-triazin | marineblau |

Tabelle 3 (Fortsetzung)

| Nr. | Diazokomponente | Diazokomponente | Farbton auf Baumwolle |
|---|---|---|---|
| 70 | 1-Amino-5-(2,3-dichlor-propionyl-amino)-benzol-2-sulfonsäure | 2-(3'-Amino-4'-sulfophenylamino)-4-fluor-6-(bis-(β-vinylsulfonyl-äthyl)-amino)-1,3,5-triazin | marineblau |
| 71 | 1-Amino-5-chloracetylamino-benzol-2-sulfonsäure | 2-(3'-Amino-4'-sulfophenylamino)-4-chlor-6-(β-vinylsulfonyl-äthylamino)-1,3,5-triazin | marineblau |
| 72 | 1-Amino-5-chloracetylamino-benzol-2-sulfonsäure | 2-(3'-Amino-4',6'-disulfophenylamino)-4-chlor-6-(β-vinylsulfonyl-äthylamino)-1,3,5-triazin | marineblau |
| 73 | 1-Amino-5-chloracetylamino-benzol-2-sulfonsäure | 2-(4'-Amino-2',5'-disulfophenylamino)-4-chlor-6-(β-vinylsulfonyl-äthylamino)-1,3,5-triazin | grünstichig blau |
| 74 | 1-Amino-5-chloracetylamino-benzol-2-sulfonsäure | 2-(3'-Amino-4',6'-disulfophenylamino)--4-chlor-6-(β-(β-chloräthylsulfonyl)-äthylamino)-1,3,5-triazin | marineblau |
| 75 | 1-Amino-5-chloracetylamino-benzol-2-sulfonsäure | 2-(3'-Amino-4'-sulfophenylamino)-4-chlor-6-(bis-(β-vinylsulfonyl-äthyl)-amino)-1,3,5-triazin | marineblau |
| 76 | 1-Amino-5-chloracetylamino-benzol-2-sulfonsäure | 2-(3'-Amino-4'-sulfophenylamino)-4-fluor-6-(β-vinylsulfonyl-äthylamino)-1,3,5-triazin | marineblau |
| 77 | 1-Amino-5-chloracetylamino-benzol-2-sulfonsäure | 2-(3'-Amino-4',6'-disulfophenylamino)-4-fluor-6-(β-vinylsulfonyl-äthylamino)-1,3,5-triazin | marineblau |
| 78 | 1-Amino-5-chloracetylamino-benzol-2-sulfonsäure | 2-(4'-Amino-2',5'-disulfophenylamino)-4-fluor-6-(β-vinylsulfonyl-äthylamino)-1,3,5-triazin | grünstichig blau |
| 79 | 1-Amino-5-chloracetylamino-benzol-2-sulfonsäure | 2-(3'-Amino-4',6'-disulfophenylamino)--4-fluor-6-(β-(β-chloräthylsulfonyl)-äthylamino)-1,3,5-triazin | marineblau |
| 80 | 1-Amino-5-chloracetylamino-benzol-2-sulfonsäure | 2-(3'-Amino-4'-sulfophenylamino)-4-fluor-6-(bis-(β-vinylsulfonyl-äthyl)-amino)-1,3,5-triazin | marineblau |
| 81 | 2-(3'-Amino-4',6'-disulfophenylamino)-4-chlor-6-(β-vinylsulfonyl-äthylamino)-1,3,5-triazin | 1-Amino-4-(β-sulfato-äthylsulfonyl)-benzol | grünstichig blau |
| 82 | 2-(4'-Amino-2',5'-disulfophenylamino)-4-chlor-6-(β-vinylsulfonyl-äthylamino)-1,3,5-triazin | 1-Amino-4-(β-sulfato-äthylsulfonyl)-benzol | grünstichig blau |
| 83 | 2-(3'-Amino-4',6'-disulfophenylamino)-4-chlor-6-(β-(β-chlor-äthylsulfonyl)-äthylamino)-1,3,5-triazin | 1-Amino-4-(β-sulfato-äthylsulfonyl)-benzol | grünstichig blau |
| 84 | 2-(3'-Amino-4'-sulfophenylamino)-4-chlor-6-(bis-(β-vinylsulfonyl-äthyl)-amino)-1,3,5-triazin | 1-Amino-4-(β-sulfato-äthylsulfonyl)-benzol | grünstichig blau |
| 85 | 2-(3'-Amino-4'-sulfophenylamino)-4-fluor-6-(β-vinylsulfonyl-äthylamino)-1,3,5-triazin | 1-Amino-4-(β-sulfato-äthylsulfonyl)-benzol | grünstichig blau |
| 86 | 2-(3'-Amino-4',6'-disulfophenylamino)-4-fluor-6-(β-vinylsulfonyl-äthylamino)-1,3,5-triazin | 1-Amino-4-(β-sulfato-äthylsulfonyl)-benzol | grünstichig blau |

Tabelle 3 (Fortsetzung)

| Nr. | Diazokomponente | Diazokomponente | Farbton auf Baumwolle |
|---|---|---|---|
| 87 | 2-(4′-Amino-2′,5′-disulfophenylamino)-4-fluor-6-(β-vinylsulfonyl-äthylamino)-1,3,5-triazin | 1-Amino-4-(β-sulfato-äthylsulfonyl)-benzol | grünstichig blau |
| 88 | 2-(3′-Amino-4′,6′-disulfophenylamino)-4-fluor-6-(β-(β-chlor-äthylsulfonyl)-äthylamino)-1,3,5-triazin | 1-Amino-4-(β-sulfato-äthylsulfonyl)-benzol | grünstichig blau |
| 89 | 2-(3′-Amino-4′-sulfophenylamino)-4-fluor-6-(bis-(β-vinylsulfonyl-äthyl)-amino)-1,3,5-triazin | 1-Amino-4-(β-sulfato-äthylsulfonyl)-benzol | grünstichig blau |
| 90 | 2-(3′-Amino-4′-sulfophenylamino)-4-chlor-6-(β-vinylsulfonyl-äthylamino)-1,3,5-triazin | 1-Amino-3-(β-sulfato-äthylsulfonyl)-benzol | grünstichig blau |
| 91 | 2-(3′-Amino-4′,6′-disulfophenylamino)-4-chlor-6-(β-vinylsulfonyl-äthylamino)-1,3,5-triazin | 1-Amino-3-(β-sulfato-äthylsulfonyl)-benzol | grünstichig blau |
| 92 | 2-(4′-Amino-2′,5′-disulfophenylamino)-4-chlor-6-(β-vinylsulfonyl-äthylamino)-1,3,5-triazin | 1-Amino-3-(β-sulfato-äthylsulfonyl)-benzol | grünstichig blau |
| 93 | 2-(3′-Amino-4′,6′-disulfophenylamino)--4-chlor-6-(β-(β-chlor-äthylsulfonyl)--äthylamino)-1,3,5-triazin | 1-Amino-3-(β-sulfato-äthylsulfonyl)-benzol | grünstichig blau |
| 94 | 2-(3′-Amino-4′-sulfophenylamino)-4-chlor-6-(bis-(β-vinylsulfonyl-äthyl)-amino)-1,3,5-triazin | 1-Amino-3-(β-sulfato-äthylsulfonyl)-benzol | grünstichig blau |
| 95 | 2-(3′-Amino-4′-sulfophenylamino)-4-fluor-6-(β-vinylsulfonyl-äthylamino)-1,3,5-triazin | 1-Amino-3-(β-sulfato-äthylsulfonyl)-benzol | grünstichig blau |
| 96 | 2-(3′-Amino-4′,6′-disulfophenylamino)-4-fluor-6-(β-vinylsulfonyl-äthylamino)-1,3,5-triazin | 1-Amino-3-(β-sulfato-äthylsulfonyl)-benzol | grünstichig blau |
| 97 | 2-(4′-Amino-2′,5′-disulfophenylamino)-4-fluor-6-(β-vinylsulfonyl-äthylamino)-1,3,5-triazin | 1-Amino-3-(β-sulfato-äthylsulfonyl)-benzol | grünstichig blau |
| 98 | 2-(3′-Amino-4′,6′-disulfophenylamino)-4-fluor-6-(β-(β-chlor-äthylsulfonyl)-äthylamino)-1,3,5-triazin | 1-Amino-3-(β-sulfato-äthylsulfonyl)-benzol | grünstichig blau |
| 99 | 2-(3′-Amino-4′-sulfophenylamino)-4-fluor-6-(bis-(β-vinylsulfonyl-äthyl)-amino)-1,3,5-triazin | 1-Amino-3-(β-sulfato-äthylsulfonyl)-benzol | grünstichig blau |
| 100 | 2-(3′-Amino-4′-sulfophenylamino)-4-chlor-6-(β-vinylsulfonyl-äthylamino)-1,3,5-triazin | 1-Amino-2-(β-sulfato-äthylsulfonyl)-benzol | grünstichig blau |
| 101 | 2-(3′-Amino-4′,6′-disulfophenylamino)-4-chlor-6-(β-vinylsulfonyl-äthylamino)-1,3,5-triazin | 1-Amino-2-(β-sulfato-äthylsulfonyl)-benzol | grünstichig blau |
| 102 | 2-(4′-Amino-2′,5′-disulfophenylamino)-4-chlor-6-(β-vinylsulfonyl-äthylamino)-1,3,5-triazin | 1-Amino-2-(β-sulfato-äthylsulfonyl)-benzol | grünstichig blau |
| 103 | 2-(3′-Amino-4′,6′-disulfophenylamino)-4-chlor-6-(β-(β-chlor-äthylsulfonyl)-äthylamino)-1,3,5-triazin | 1-Amino-2-(β-sulfato-äthylsulfonyl)-benzol | grünstichig blau |

Tabelle 3 (Fortsetzung)

| Nr. | Diazokomponente | Diazokomponente | Farbton auf Baumwolle |
|---|---|---|---|
| 104 | 2-(3′-Amino-4′-sulfophenylamino)-4-chlor-6-(bis-(β-vinylsulfonyl-äthyl)-amino)-1,3,5-triazin | 1-Amino-2-(β-sulfato-äthylsulfonyl)-benzol | grünstichig blau |
| 105 | 2-(3′-Amino-4′-sulfophenylamino)-4-fluor-6-(β-vinylsulfonyl-äthylamino)-1,3,5-triazin | 1-Amino-2-(β-sulfato-äthylsulfonyl)-benzol | grünstichig blau |
| 106 | 2-(3′-Amino-4′,6′-disulfophenylamino)-4-fluor-6-(β-vinylsulfonyl-äthylamino)-1,3,5-triazin | 1-Amino-2-(β-sulfato-äthylsulfonyl)-benzol | grünstichig blau |
| 107 | 2-(4′-Amino-2′,5′-disulfophenylamino)-4-fluor-6-(β-vinylsulfonyl-äthylamino)-1,3,5-triazin | 1-Amino-2-(β-sulfato-äthylsulfonyl)-benzol | grünstichig blau |
| 108 | 2-(3′-Amino-4′,6′-disulfophenylamino)-4-fluor-6-(β-(β-chlor-äthylsulfonyl)-äthylamino)-1,3,5-triazin | 1-Amino-2-(β-sulfato-äthylsulfonyl)-benzol | grünstichig blau |
| 109 | 2-(3′-Amino-4′-sulfophenylamino)-4-fluor-6-(bis-(β-vinylsulfonyl-äthyl)-amino)-1,3,5-triazin | 1-Amino-2-(β-sulfato-äthylsulfonyl)-benzol | grünstichig blau |
| 110 | 2-(3′-Amino-4′-sulfophenylamino)-4-chlor-6-(β-vinylsulfonyl-äthylamino)-1,3,5-triazin | 1-Amino-4-allylsulfonylbenzol | grünstichig blau |
| 111 | 2-(3′-Amino-4′,6′-disulfophenylamino)-4-chlor-6-(β-vinylsulfonyl-äthylamino)-1,3,5-triazin | 1-Amino-4-allylsulfonylbenzol | grünstichig blau |
| 112 | 2-(4′-Amino-2′,5′-disulfophenylamino)-4-chlor-6-(β-vinylsulfonyl-äthylamino)-1,3,5-triazin | 1-Amino-4-allylsulfonylbenzol | grünstichig blau |
| 113 | 2-(3′-Amino-4′,6′-disulfophenylamino)-4-chlor-6-(β-(β-chlor-äthylsulfonyl)-äthylamino)-1,3,5-triazin | 1-Amino-4-allylsulfonylbenzol | grünstichig blau |
| 114 | 2-(3′-Amino-4′-sulfophenylamino)-4-chlor-6-(bis-(β-vinylsulfonyl-äthyl)-amino)-1,3,5-triazin | 1-Amino-4-allylsulfonylbenzol | grünstichig blau |
| 115 | 2-(3′-Amino-4′-sulfophenylamino)-4-fluor-6-(β-vinylsulfonyl-äthylamino)-1,3,5-triazin | 1-Amino-4-allylsulfonylbenzol | grünstichig blau |
| 116 | 2-(3′-Amino-4′,6′-disulfophenylamino)-4-fluor-6-(β-vinylsulfonyl-äthylamino)-1,3,5-triazin | 1-Amino-4-allylsulfonylbenzol | grünstichig blau |
| 117 | 2-(4′-Amino-2′,5′-disulfophenylamino)-4-fluor-6-(β-vinylsulfonyl-äthylamino)-1,3,5-triazin | 1-Amino-4-allylsulfonylbenzol | grünstichig blau |
| 118 | 2-(3′-Amino-4′,6′-disulfophenylamino)-4-fluor-6-(β-(β-chlor-äthylsulfonyl)-äthylamino)-1,3,5-triazin | 1-Amino-4-allylsulfonylbenzol | grünstichig blau |
| 119 | 2-(3′-Amino-4′-sulfophenylamino)-4-fluor-6-(bis-(β-vinylsulfonyl-äthyl)-amino)-1,3,5-triazin | 1-Amino-4-allylsulfonylbenzol | grünstichig blau |
| 120 | 2-(3′-Amino-4′-sulfophenylamino)-4-chlor-6-(β-vinylsulfonyl-äthylamino)-1,3,5-triazin | 1-Amino-5-(2,3-dibrompropionyl-amino)-benzol-2-sulfonsäure | grünstichig blau |

Tabelle 3 (Fortsetzung)

| Nr. | Diazokomponente | Diazokomponente | Farbton auf Baumwolle |
|---|---|---|---|
| 121 | 2-(3'-Amino-4',6'-disulfophenylamino)-4-chlor-6-(β-vinylsulfonyl-äthylamino)-1,3,5-triazin | 1-Amino-5-(2,3-dibrompropionylamino)-benzol-2-sulfonsäure | grünstichig blau |
| 122 | 2-(4'-Amino-2',5'-disulfophenylamino)-4-chlor-6-(β-vinylsulfonyl-äthylamino)-1,3,5-triazin | 1-Amino-5-(2,3-dibrompropionylamino)-benzol-2-sulfonsäure | grünstichig blau |
| 123 | 2-(3'-Amino-4',6'-disulfophenylamino)-4-chlor-6-(β-(β-chlor-äthylsulfonyl)-äthylamino)-1,3,5-triazin | 1-Amino-5-(2,3-dibrompropionylamino)-benzol-2-sulfonsäure | grünstichig blau |
| 124 | 2-(3'-Amino-4'-sulfophenylamino)-4-chlor-6-(bis-(β-vinylsulfonyl-äthyl)-amino)-1,3,5-triazin | 1-Amino-5-(2,3-dibrompropionylamino)-benzol-2-sulfonsäure | grünstichig blau |
| 125 | 2-(3'-Amino-4'-sulfophenylamino)-4-fluor-6-(β-vinylsulfonyl-äthylamino)-1,3,5-triazin | 1-Amino-5-(2,3-dibrompropionylamino)-benzol-2-sulfonsäure | grünstichig blau |
| 126 | 2-(3'-Amino-4',6'-disulfophenylamino)-4-fluor-6-(β-vinylsulfonyl-äthylamino)-1,3,5-triazin | 1-Amino-5-(2,3-dibrompropionylamino)-benzol-2-sulfonsäure | grünstichig blau |
| 127 | 2-(4'-Amino-2',5'-disulfophenylamino)-4-fluor-6-(β-vinylsulfonyl-äthylamino)-1,3,5-triazin | 1-Amino-5-(2,3-dibrompropionylamino)-benzol-2-sulfonsäure | grünstichig blau |
| 128 | 2-(3'-Amino-4',6'-disulfophenylamino)-4-fluor-6-(β-(β-chlor-äthylsulfonyl)-äthylamino)-1,3,5-triazin | 1-Amino-5-(2,3-dibrompropionylamino)-benzol-2-sulfonsäure | grünstichig blau |
| 129 | 2-(3'-Amino-4'-sulfophenylamino)-4-fluor-6-(bis-(β-vinylsulfonyl-äthyl)-amino)-1,3,5-triazin | 1-Amino-5-(2,3-dibrompropionylamino)-benzol-2-sulfonsäure | grünstichig blau |
| 130 | 2-(3'-Amino-4'-sulfophenylamino)-4-chlor-6-(β-vinylsulfonyl-äthylamino)-1,3,5-triazin | 1-Amino-5-(α-bromacryloylamino)-benzol-2-sulfonsäure | grünstichig blau |
| 131 | 2-(3'-Amino-4',6'-disulfophenylamino)-4-chlor-6-(β-vinylsulfonyl-äthylamino)-1,3,5-triazin | 1-Amino-5-(α-bromacryloylamino)-benzol-2-sulfonsäure | grünstichig blau |
| 132 | 2-(4'-Amino-2',5'-disulfophenylamino)-4-chlor-6-(β-vinylsulfonyl-äthylamino)-1,3,5-triazin | 1-Amino-5-(α-bromacryloylamino)-benzol-2-sulfonsäure | grünstichig blau |
| 133 | 2-(3'-Amino-4',6'-disulfophenylamino)-4-chlor-6-(β-(β-chlor-äthylsulfonyl)-äthylamino)-1,3,5-triazin | 1-Amino-5-(α-bromacryloylamino)-benzol-2-sulfonsäure | grünstichig blau |
| 134 | 2-(3'-Amino-4'-sulfophenylamino)-4-chlor-6-(bis-(β-vinylsulfonyl-äthyl)-amino)-1,3,5-triazin | 1-Amino-5-(α-bromacryloylamino)-benzol-2-sulfonsäure | grünstichig blau |
| 135 | 2-(3'-Amino-4'-sulfophenylamino)-4-fluor-6-(β-vinylsulfonyl-äthylamino)-1,3,5-triazin | 1-Amino-5-(α-bromacryloylamino)-benzol-2-sulfonsäure | grünstichig blau |
| 136 | 2-(3'-Amino-4',6'-disulfophenylamino)-4-fluor-6-(β-vinylsulfonyl-äthylamino)-1,3,5-triazin | 1-Amino-5-(α-bromacryloylamino)-benzol-2-sulfonsäure | grünstichig blau |
| 137 | 2-(4'-Amino-2',5'-disulfophenylamino)-4-fluor-6-(β-vinylsulfonyl-äthylamino)-1,3,5-triazin | 1-Amino-5-(α-bromacryloylamino)-benzol-2-sulfonsäure | grünstichig blau |

Tabelle 3 (Fortsetzung)

| Nr. | Diazokomponente | Diazokomponente | Farbton auf Baumwolle |
|---|---|---|---|
| 138 | 2-(3′-Amino-4′,6′-disulfophenylamino)-4-fluor-6-(β-(β-chlor-äthylsulfonyl)-äthylamino)-1,3,5-triazin | 1-Amino-5-(α-bromacryloylamino)-benzol-2-sulfonsäure | grünstichig blau |
| 139 | 2-(3′-Amino-4′-sulfophenylamino)-4-fluor-6-(bis-(β-vinylsulfonyl-äthyl)-amino)-1,3,5-triazin | 1-Amino-5-(α-bromacryloylamino)-benzol-2-sulfonsäure | grünstichig blau |
| 140 | 2-(3′-Amino-4′-sulfophenylamino)-4-chlor-6-(β-vinylsulfonyl-äthylamino)-1,3,5-triazin | 1-Amino-5-(2,3-dichlor-propionyl-amino)-benzol-2-sulfonsäure | grünstichig blau |
| 141 | 2-(3′-Amino-4′,6′-disulfophenylamino)-4-chlor-6-(β-vinylsulfonyl-äthylamino)-1,3,5-triazin | 1-Amino-5-(2,3-dichlor-propionyl-amino)-benzol-2-sulfonsäure | grünstichig blau |
| 142 | 2-(4′-Amino-2′,5′-disulfophenylamino)-4-chlor-6-(β-vinylsulfonyl-äthylamino)-1,3,5-triazin | 1-Amino-5-(2,3-dichlor-propionyl-amino)-benzol-2-sulfonsäure | grünstichig blau |
| 143 | 2-(3′-Amino-4′,6′-disulfophenylamino)-4-chlor-6-(β-(β-chlor-äthylsulfonyl)-äthylamino)-1,3,5-triazin | 1-Amino-5-(2,3-dichlor-propionyl-amino)-benzol-2-sulfonsäure | grünstichig blau |
| 144 | 2-(3′-Amino-4′-sulfophenylamino)-4-chlor-6-(bis-(β-vinylsulfonyl-äthyl)-amino)-1,3,5-triazin | 1-Amino-5-(2,3-dichlor-propionyl-amino)-benzol-2-sulfonsäure | grünstichig-blau |
| 145 | 2-(3′-Amino-4′-sulfophenylamino)-4-fluor-6-(β-vinylsulfonyl-äthylamino)-1,3,5-triazin | 1-Amino-5-(2,3-dichlor-propionyl-amino)-benzol-2-sulfonsäure | grünstichig blau |
| 146 | 2-(3′-Amino-4′,6′-disulfophenylamino)-4-fluor-6-(β-vinylsulfonyl-äthylamino)-1,3,5-triazin | 1-Amino-5-(2,3-dichlor-propionyl-amino)-benzol-2-sulfonsäure | grünstichig blau |
| 147 | 2-(4′-Amino-2′,5′-disulfophenylamino)-4-fluor-6-(β-vinylsulfonyl-äthylamino)-1,3,5-triazin | 1-Amino-5-(2,3-dichlor-propionyl-amino)-benzol-2-sulfonsäure | grünstichig blau |
| 148 | 2-(3′-Amino-4′,6′-disulfophenylamino)-4-fluor-6-(β-(β-chlor-äthylsulfonyl)-äthylamino)-1,3,5-triazin | 1-Amino-5-(2,3-dichlor-propionyl-amino)-benzol-2-sulfonsäure | grünstichig blau |
| 149 | 2-(3′-Amino-4′-sulfophenylamino)-4-fluor-6-(bis-(β-vinylsulfonyl-äthyl)-amino)-1,3,5-triazin | 1-Amino-5-(2,3-dichlor-propionyl-amino)-benzol-2-sulfonsäure | grünstichig blau |
| 150 | 2-(3′-Amino-4′-sulfophenylamino)-4-chlor-6-(β-vinylsulfonyl-äthylamino)-1,3,5-triazin | 1-Amino-5-chloracetylamino-benzol-2-sulfonsäure | grünstichig blau |
| 151 | 2-(3′-Amino-4′,6′-disulfophenylamino)-4-chlor-6-(β-vinylsulfonyl-äthylamino)-1,3,5-triazin | 1-Amino-5-chloracetylamino-benzol-2-sulfonsäure | grünstichig blau |
| 152 | 2-(4′-Amino-2′,5′-disulfophenylamino)-4-chlor-6-(β-vinylsulfonyl-äthylamino)-1,3,5-triazin | 1-Amino-5-chloracetylamino-benzol-2-sulfonsäure | grünstichig blau |
| 153 | 2-(3′-Amino-4′,6′-disulfophenylamino)-4-chlor-6-(β-(β-chlor-äthylsulfonyl)-äthylamino)-1,3,5-triazin | 1-Amino-5-chloracetylamino-benzol-2-sulfonsäure | grünstichig blau |
| 154 | 2-(3′-Amino-4′-sulfophenylamino)-4-chlor-6-(bis-(β-vinylsulfonyl-äthyl)-amino)-1,3,5-triazin | 1-Amino-5-chloracetylamino-benzol-2-sulfonsäure | grünstichig blau |

Tabelle 3 (Fortsetzung)

| Nr. | Diazokomponente | Diazokomponente | Farbton auf Baumwolle |
|---|---|---|---|
| 155 | 2-(3'-Amino-4'-sulfophenylamino)-4-fluor-6-(β-vinylsulfonyl-äthylamino)-1,3,5-triazin | 1-Amino-5-chloracetylamino-benzol-2-sulfonsäure | grünstichig blau |
| 156 | 2-(3'-Amino-4',6'-disulfophenylamino)-4-fluor-6-(β-vinylsulfonyl-äthylamino)-1,3,5-triazin | 1-Amino-5-chloracetylamino-benzol-2-sulfonsäure | grünstichig blau |
| 157 | 2-(4'-Amino-2',5'-disulfophenylamino)-4-fluor-6-(β-vinylsulfonyl-äthylamino)-1,3,5-triazin | 1-Amino-5-chloracetylamino-benzol-2-sulfonsäure | grünstichig blau |
| 158 | 2-(3'-Amino-4',6'-disulfophenylamino)-4-fluor-6-(β-(β-chlor-äthylsulfonyl)-äthylamino)-1,3,5-triazin | 1-Amino-5-chloracetylamino-benzol-2-sulfonsäure | grünstichig blau |
| 159 | 2-(3'-Amino-4'-sulfophenylamino)-4-fluor-6-(bis-(β-vinylsulfonyl-äthyl)-amino)-1,3,5-triazin | 1-Amino-5-chloracetylamino-benzol-2-sulfonsäure | grünstichig blau |
| 160 | 1-Amino-5-(4-(β-chloräthyl-sulfonyl)-butyrylamino)-benzol-2-sulfonsäure | 2-(3'-Amino-4'-sulfophenylamino)-4-chlor-6-(β-vinylsulfonyl-äthylamino)-1,3,5-triazin | marineblau |
| 161 | 1-Amino-5-(4-(β-chloräthyl-sulfonyl)-butyrylamino)-benzol-2-sulfonsäure | 2-(3'-Amino-4',6'-disulfophenylamino)-4-chlor-6-(β-vinylsulfonyl-äthylamino)-1,3,5-triazin | marineblau |
| 162 | 1-Amino-5-(4-(β-chloräthyl-sulfonyl)-butyrylamino)-benzol-2-sulfonsäure | 2-(4'-Amino-2',5'-disulfophenylamino)-4-chlor-6-(β-vinylsulfonyl-äthylamino)-1,3,5-triazin | grünstichig blau |
| 163 | 1-Amino-5-(4-(β-chloräthyl-sulfonyl)-butyrylamino)-benzol-2-sulfonsäure | 2-(3'-Amino-4',6'-disulfophenylamino)-4-chlor-6-(β-(β-chloräthylsulfonyl)-äthylamino)-1,3,5-triazin | marineblau |
| 164 | 1-Amino-5-(4-(β-chloräthyl-sulfonyl)-butyrylamino)-benzol-2-sulfonsäure | 2-(3'-Amino-4'-sulfophenylamino)-4-chlor-6-(bis-(β-vinylsulfonyläthyl)-amino)-1,3,5-triazin | marineblau |
| 165 | 1-Amino-5-(4-(β-chloräthyl-sulfonyl)-butyrylamino)-benzol-2-sulfonsäure | 2-(3'-Amino-4'-sulfophenylamino)-4-fluor-6-(β-vinylsulfonyl-äthylamino)-1,3,5-triazin | marineblau |
| 166 | 1-Amino-5-(4-(β-chloräthyl-sulfonyl)-butyrylamino)-benzol-2-sulfonsäure | 2-(3'-Amino-4',6'-disulfophenylamino)-4-fluor-6-(β-vinylsulfonyl-äthylamino)-1,3,5-triazin | marineblau |
| 167 | 1-Amino-5-(4-(β-chloräthyl-sulfonyl)-butyrylamino)-benzol-2-sulfonsäure | 2-(4'-Amino-2',5'-disulfophenylamino)-4-fluor-6-(β-vinylsulfonyl-äthylamino)-1,3,5-triazin | grünstichig blau |
| 168 | 1-Amino-5-(4-(β-chloräthyl-sulfonyl)-butyrylamino)-benzol-2-sulfonsäure | 2-(3'-Amino-4',6'-disulfophenylamino)--4-fluor-6-(β-(β-chloräthylsulfonyl)-äthylamino)-1,3,5-triazin | marineblau |
| 169 | 1-Amino-5-(4-(β-chloräthyl-sulfonyl)-butyrylamino)-benzol-2-sulfonsäure | 2-(3'-Amino-4'-sulfophenylamino)-4-fluor-6-(bis-(β-vinylsulfonyläthyl)-amino)-1,3,5-triazin | marineblau |
| 170 | 2-(3'-Amino-4'-sulfophenylamino)-4-chlor-6-(β-vinylsulfonyl-äthylamino)-1,3,5-triazin | 1-Amino-5-(4-(β-chloräthylsulfonyl)-butyrylamino)-benzol-2-sulfonsäure | grünstichig blau |
| 171 | 2-(3'-Amino-4',6'-disulfophenylamino)-4-chlor-6-(β-vinylsulfonyl-äthylamino)-1,3,5-triazin | 1-Amino-5-(4-(β-chloräthylsulfonyl)-butyrylamino)-benzol-2-sulfonsäure | grünstichig blau |

Tabelle 3 (Fortsetzung)

| Nr. | Diazokomponente | Diazokomponente | Farbton auf Baumwolle |
|---|---|---|---|
| 172 | 2-(4'-Amino-2',5'-disulfophenylamino)-4-chlor-6-(β-vinylsulfonyl-äthylamino)-1,3,5-triazin | 1-Amino-5-(4-(β-chloräthylsulfonyl)-butyrylamino)-benzol-2-sulfonsäure | grünstichig blau |
| 173 | 2-(3'-Amino-4',6'-disulfophenylamino)--4-chlor-6-(β-(β-chloräthylsulfonyl)-äthylamino)-1,3,5-triazin | 1-Amino-5-(4-(β-chloräthylsulfonyl)-butyrylamino)-benzol-2-sulfonsäure | grünstichig blau |
| 174 | 2-(3'-Amino-4'-sulfophenylamino)-4-chlor-6-(bis-(β-vinylsulfonyl-äthyl)-amino)-1,3,5-triazin | 1-Amino-5-(4-(β-chloräthylsulfonyl)-butyrylamino)-benzol-2-sulfonsäure | grünstichig blau |
| 175 | 2-(3'-Amino-4'-sulfophenylamino)-4-fluor-6-(β-vinylsulfonyl-äthylamino)-1,3,5-triazin | 1-Amino-5-(4-(β-chloräthylsulfonyl)-butyrylamino)-benzol-2-sulfonsäure | grünstichig blau |
| 176 | 2-(3'-Amino-4',6'-disulfophenylamino)-4-fluor-6-(β-vinylsulfonyl-äthylamino)-1,3,5-triazin | 1-Amino-5-(4-(β-chloräthylsulfonyl)-butyrylamino)-benzol-2-sulfonsäure | grünstichig blau |
| 177 | 2-(4'-Amino-2',5'-disulfophenylamino)-4-fluor-6-(β-vinylsulfonyl-äthylamino)-1,3,5-triazin | 1-Amino-5-(4-(β-chloräthylsulfonyl)-butyrylamino)-benzol-2-sulfonsäure | grünstichig blau |
| 178 | 2-(3'-Amino-4',6'-disulfophenylamino)--4-fluor-6-(β-(β-chloräthylsulfonyl)-äthylamino)-1,3,5-triazin | 1-Amino-5-(4-(β-chloräthylsulfonyl)-butyrylamino)-benzol-2-sulfonsäure | grünstichig blau |
| 179 | 2-(3'-Amino-4'-sulfophenylamino)-4-fluor-6-(bis-(β-vinylsulfonyläthyl)-amino)-1,3,5-triazin | 1-Amino-5-(4-(β-chloräthylsulfonyl)-butyrylamino)-benzol-2-sulfonsäure | grünstichig blau |

Beispiel 5:

31,9 Teile 1-Amino-8-hydroxynaphthalin-4,6-disulfonsäure werden in 100 Teilen Wasser neutral gelöst. Diese Lösung wird während 10 Minuten zu einer Mischung von 200 Teilen Eis und Wasser, 18,5 Teilen 2,4,6-Trichlor-1,3,5-triazin und 10 Teilen 37%iger Salzsäure getropft. Bis zur vollständigen Kondensation wird der pH der Reaktionsmischung durch ständige Zugabe von 2n Natriumhydroxidlösung bei 1,5 gehalten.

Dieses Zwischenprodukt wird bei 0 bis 10°C und pH 1,0 mit 28,1 Teilen diazotiertem 1-Amino-4-(β-sulfatoäthyl-sulfonyl)-benzol gekuppelt. Nach vollständiger Kupplungsreaktion bei pH 6,5 wird der pH der Reaktionslösung auf 8,0 erhöht.

Nach Zusatz von 22,9 Teilen β-(β-Chloräthylsulfonyl)-äthylamin-hydrochlorid wird die Temperatur der Reaktionsmischung von 5°C langsam bis auf 20°C erhöht. Dabei wird der pH der Reaktionsmischung durch ständige Zugabe von 2n Natriumhydroxidlösung anfänglich bei 6,5 und dann bei 8,0 gehalten. Nach vollständiger Kondensations- und Eliminierungs-Reaktion bei pH 10,0 und 20°C wird der gebildete Reaktivfarbstoff der Formel

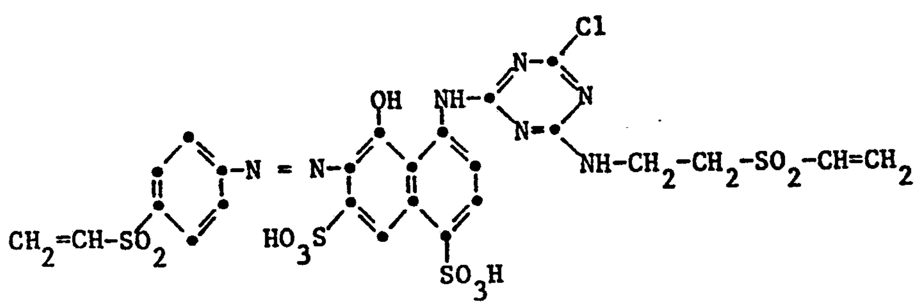

durch Einstreuen von Kaliumchlorid bei pH 7,0 ausgesalzen, filtriert und im Vakuum getrocknet. Er färbt Baumwolle in Rottönen.

Weitere wertvolle Reaktivfarbstoffe, die Baumwolle in den in Tabelle 4, Spalte 3 angegebenen Farbtönen färben, werden erhalten, wenn man in der Herstellungsvorschrift von Beispiel 5 1-Amino-8-hydroxynaphthalin-4,6-disulfonsäure durch

eines der in Tabelle 4 Spalte 2 angegebenen Zwischenprodukte ersetzt.

Tabelle 4

| Nr. | Zwischenprodukt | Farbton auf Baumwolle |
|---|---|---|
| 1 | 2-Amino-5-hydroxynaphthalin-7-sulfonsäure | orange |
| 2 | 2-Methylamino-5-hydroxy-naphthalin-7-sulfonsäure | orange |
| 3 | 3-Amino-5-hydroxynaphthalin-7-sulfonsäure | rot |

Beispiel 6

16,0 Teile 1-Amino-8-hydroxynaphthalin-4,6-disulfonsäure werden in 400 ml Wasser neutral gelöst und die Lösung auf 0 bis 5°C abgekühlt. Bei dieser Temperatur und pH 4,5 werden 7,1 Teile 2,4,6-Trifluor-1,3,5-triazin innert 15 Minuten zugetropft, wobei der pH der Reaktionslösung durch gleichzeitige Zugabe von 2n Natriumhydroxidlösung schwach kongosauer gehalten wird. Nach Zusatz von 11,4 Teilen β-(β-Chloräthylsulfonyl)-äthylamin-hydrochlorid wird der pH der Reaktionsmischung durch ständige Zugabe von 2n Natriumhydroxidlösung zuerst kurze Zeit bei 6,0 und dann bei 8,0 gehalten. Dabei wird die Temperatur innert 2 bis 3 Stunden auf 20 bis 25°C erhöht. Nach vollständiger Kondensations- und Eliminierungsreaktion wird dieses Farbstoffzwischenprodukt bei 0 bis 10°C und pH 6,0 mit 14,1 Teilen diazotiertem 1-Amino-4-(β-sulfatoäthylsulfonyl)-benzol gekuppelt. Nach vollständiger Kupplungsreaktion bei pH 6,5 wird die Reaktionsmischung bei 20°C durch ständige Zugabe von 2n Natriumhydroxidlösung bei einem pH von 9,0 gehalten, bis die vollständige Eliminierung durch Chromatographie angezeigt wird. Danach wird die Reaktionsmischung bei pH 6,5 geklärt und der gebildete Reaktivfarbstoff der Formel

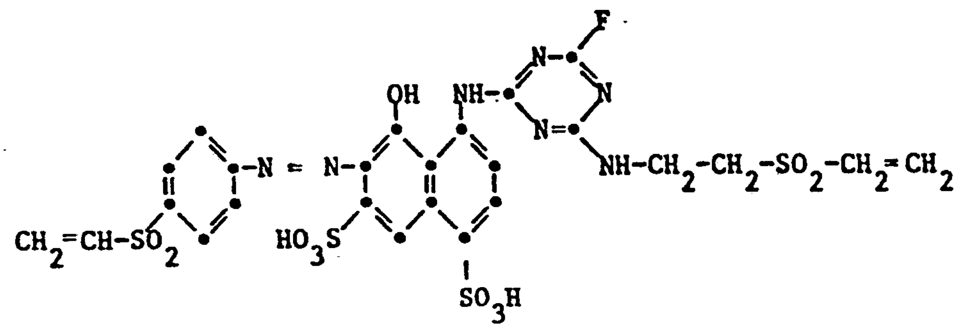

durch Einstreuen von Natriumchlorid ausgesalzen, filtriert und im Vakuum getrocknet. Er färbt Baumwolle in Rottönen.

Weitere wertvolle Reaktivfarbstoffe, die Baumwolle in den in Tabelle 5, Spalte 3 angegebenen Farbtönen färben, werden erhalten, wenn man in der Herstellungsvorschrift von Beispiel 6 1-Amino-8-hydroxynaphthalin-4,6-disulfonsäure durch eines der in Tabelle 5 Spalte 2 angegebenen Zwischenprodukte ersetzt.

Tabelle 5

| Nr. | Zwischenprodukt | Farbton auf Baumwolle |
|---|---|---|
| 1 | 2-Amino-5-hydroxynaphthalin-7-sulfonsäure | orange |
| 2 | 2-Methylamino-5-hydroxy-naphthalin-7-sulfonsäure | orange |
| 3 | 3-Amino-5-hydroxynaphthalin-7-sulfonsäure | rot |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%iger Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%iger Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

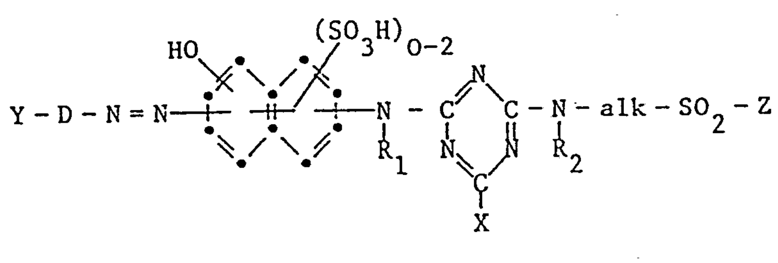

(1)

oder der Formel

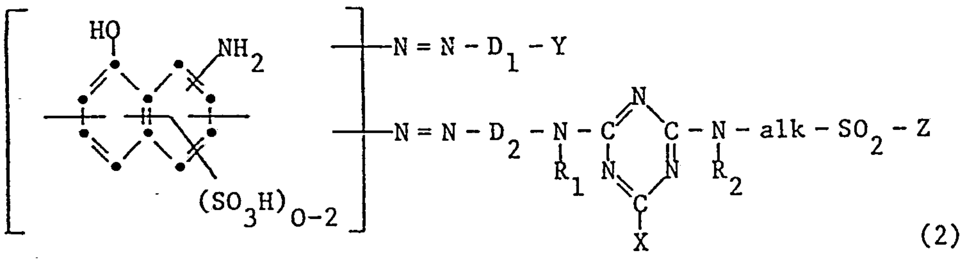

(2) ,

oder der Formel

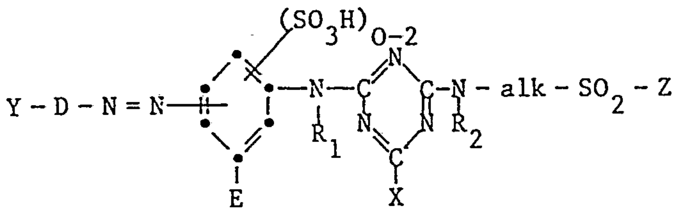

(2a)

sowie deren metallisierte Formen,

worin D, $D_1$ und $D_2$ ein Phenylen- oder Naphthylenrest, der weitersubstituiert sein kann, $R_1$ Wasserstoff oder gegebenenfalls substituiertes $C_{1-4}$-Alkyl, $R_2$ Wasserstoff, gegebenenfalls substituiertes Alkyl oder Aryl, oder ein Rest der Formel -alk-$SO_2$-Z, E -$NH_2$, -$CH_3$, -NH-CO-$NH_2$, -NH-CO-$CH_3$ oder
-NH-CO-$CH_2$-OH, alk $C_{2-6}$-Alkylen, Y ein Rest -$SO_2$-Z, -$SO_2$-N($R_1$)-Z, -N($R_1$)-$SO_2$-Z,-N($R_1$)-CO- $(CH_2)_{3-5}$ $SO_2$-Z, -$SO_2$-F,-$SO_2$-$CH_2$-CH=$CH_2$, - N($R_1$)-CO-CBr=$CH_2$, -N($R_1$)-CO-CHBr-$CH_2$Br, -N($R_1$)-CO-CCl=$CH_2$, -N($R_1$)-CO-CHCl-$CH_2$Cl, -N($R_1$)-CO-$CH_2$Cl oder -N($R_1$)-CO-CH=$CH_2$, Z ein Rest -CH=$CH_2$ oder $-CH_2CH_2$-A, A ein unter alkalischen Bedingungen abspaltbarer anorganischer oder organischer Rest, und X Fluor, Chlor oder Hydroxy ist.

2. Reaktivfarbstoffe gemäss Anspruch 1, der Formel

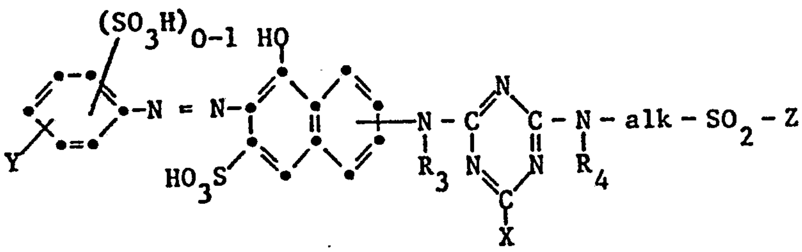

(3) ,

worin $R_3$ Wasserstoff, Methyl oder Äthyl, $R_4$ Wasserstoff oder ein Rest -alk-$SO_2$-Z, alk $C_{2-6}$-Alkylen, Y ein Rest
-$SO_2$-Z, Z ein Rest -CH=$CH_2$ oder -$CH_2CH_2$-A, A Sulfato, Acetoxy, Chlor, Phosphato oder Thiosulfato, und X Fluor, Chlor oder Hydroxy ist.

3. Reaktivfarbstoffe gemäss Anspruch 1, der Formel

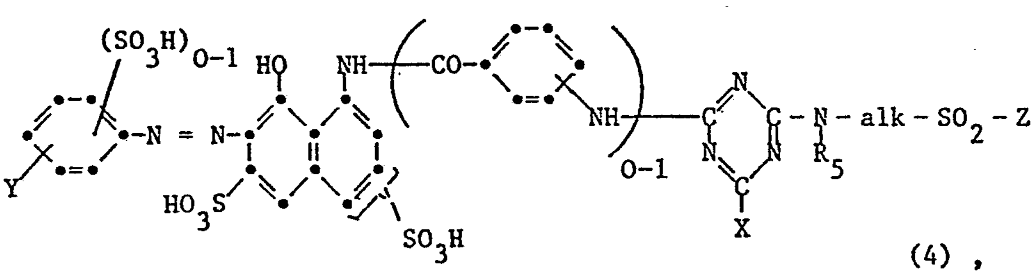

(4) ,

worin $R_5$ Wasserstoff oder ein Rest -alk-$SO_2$-Z, alk $C_{2-6}$-Alkylen, Y ein Rest -$SO_2$-Z, Z ein Rest -CH=$CH_2$ oder -$CH_2CH_2$-A, A Sulfato, Acetoxy, Chlor, Phosphato oder Thiosulfato, und X Fluor, Chlor oder Hydroxy ist.

4. Reaktivfarbstoffe gemäss Anspruch 1, der Formel

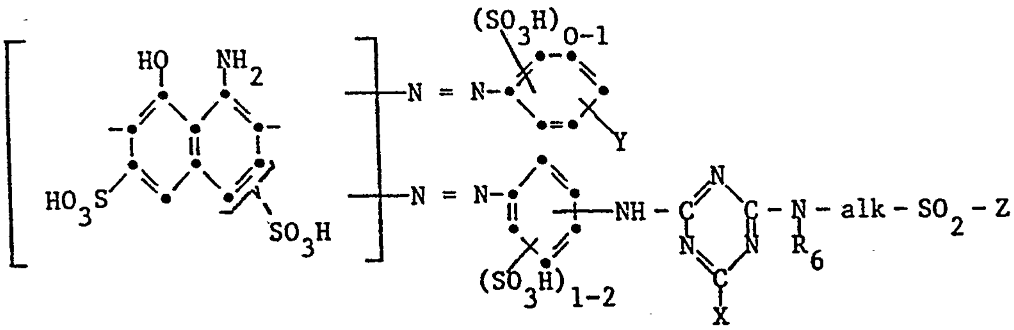

(5),

worin $R_6$ Wasserstoff oder ein Rest -alk-$SO_2$-Z, alk $C_{2-6}$-Alkylen, Y ein Rest -$SO_2$-Z, Z ein Rest -$CH=CH_2$ oder -$CH_2CH_2$-A, A Sulfato, Acetoxy, Chlor, Phosphato oder Thiosulfato, und X Fluor, Chlor oder Hydroxy ist.

5. Reaktivfarbstoffe gemäss Anspruch 4, der Formel

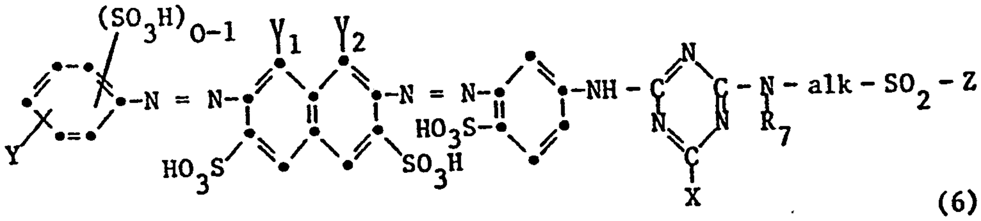

(6) ,

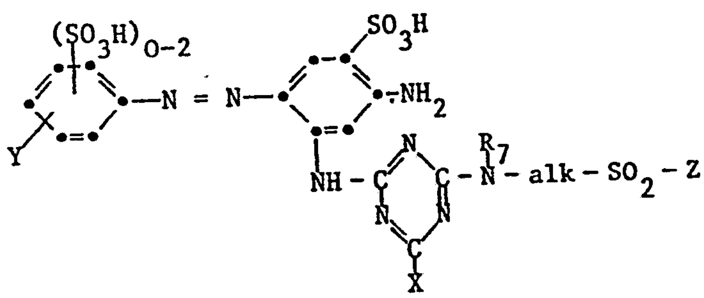

(6a) ,

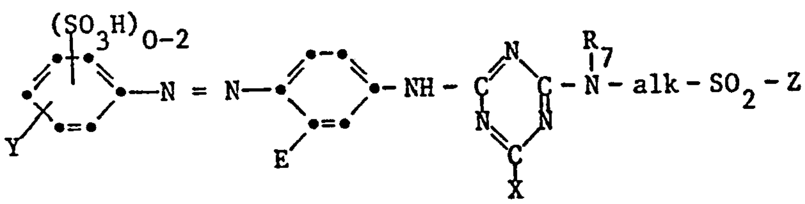

(6b)

worin $R_7$ Wasserstoff oder ein Rest -alk-$SO_2$-Z, alk $C_{2-6}$-Alkylen, Y ein Rest -NH-CO-CHBr-$CH_2$-Br, -NH-CO-CBr=$CH_2$ oder -$SO_2$-Z, Z ein Rest -$CH=CH_2$ oder -$CH_2CH_2$-A, A Sulfato, Acetoxy, Chlor, Phosphato oder Thiosulfato, X Fluor, Chlor oder Hydroxy, E -$NH_2$, -$CH_3$, -NH-CO-$NH_2$ oder -NH-CO-$CH_3$, und ein V OH und das andere V $NH_2$ ist.

6. Reaktivfarbstoff gemäss Anspruch 3, der Formel

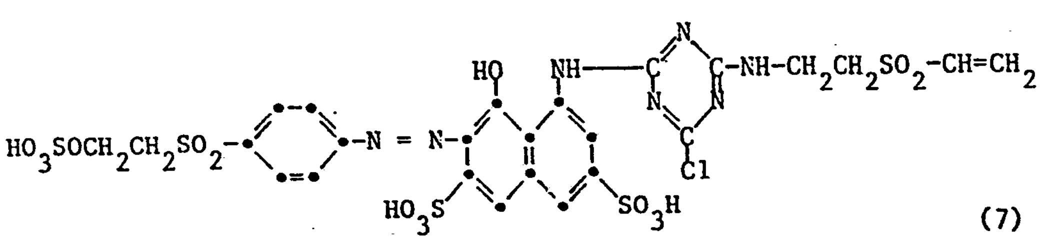

(7) .

7. Reaktivfarbstoff gemäss Anspruch 3, der Formel

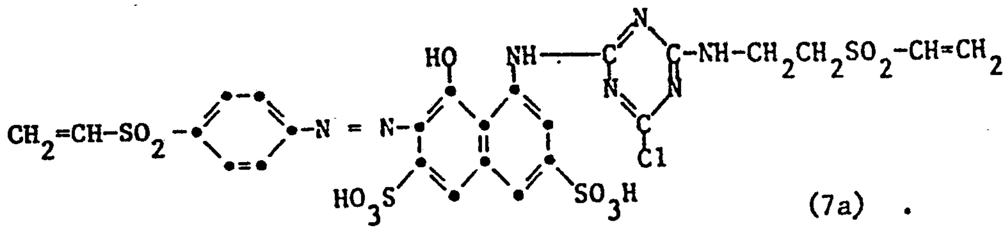

(7a) .

8. Reaktivfarbstoff gemäss Anspruch 3, der Formel

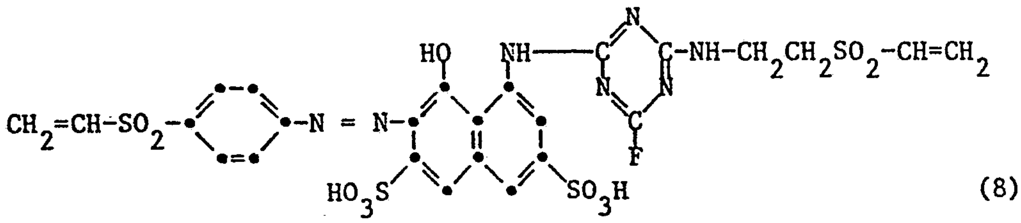

(8) .

9. Reaktivfarbstoff gemäss Anspruch 5, der Formel

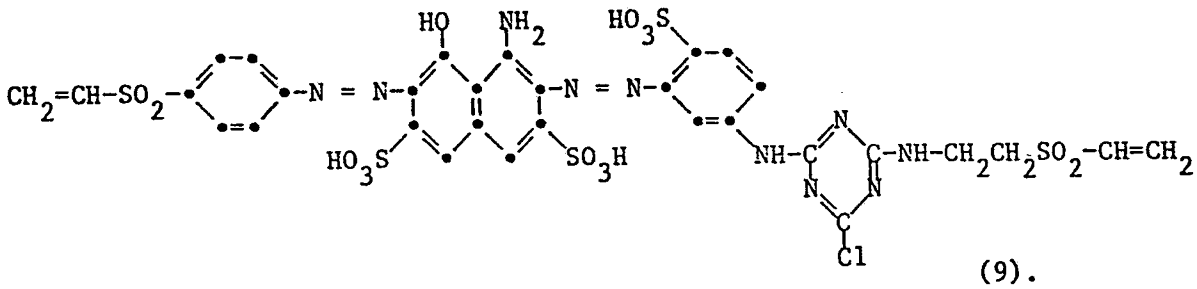

(9).

10. Reaktivfarbstoff gemäss Anspruch 5, der Formel

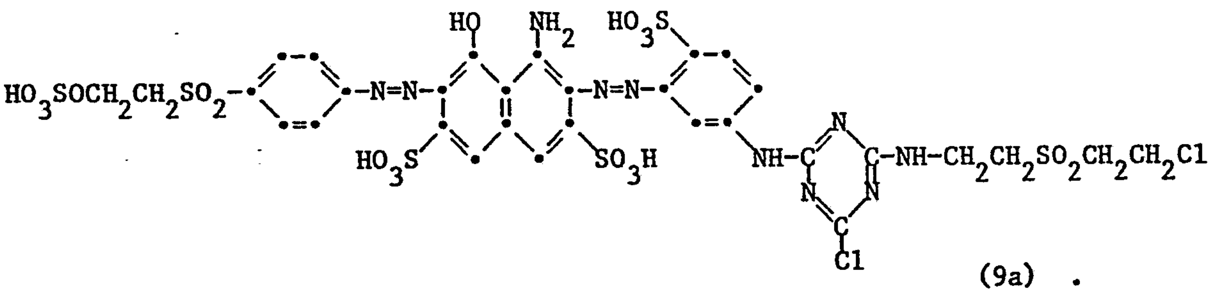

(9a) .

11. Verfahren zur Herstellung von Reaktivfarbstoffen gemäss Anspruch 1, dadurch gekennzeichnet, dass man Farbstoffe der Formel

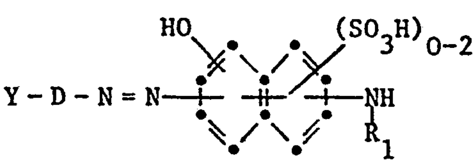

(10) ,

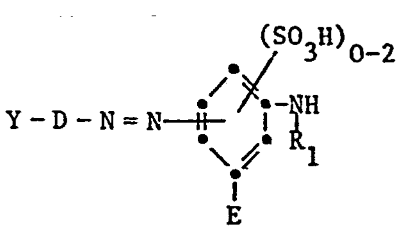

(10a)

oder

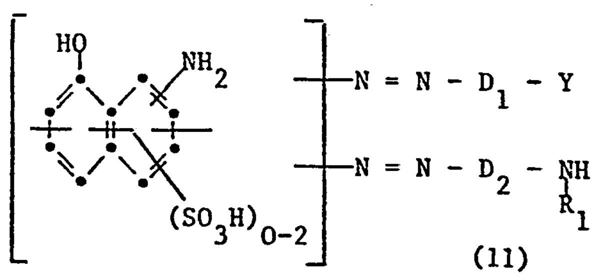

(11)

oder ihre Vorprodukte mit Reaktivkomponenten zur Einführung der Reste

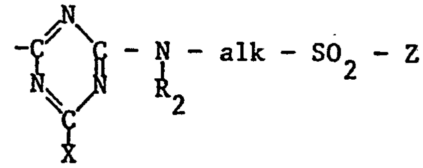

(12)

zu Reaktivfarbstoffen der Formel (1), (2), oder (2a) umsetzt, oder die erhaltenen Zwischenprodukte in die gewünschten Endfarbstoffe überführt, und gegebenenfalls eine weitere Umwandlungsreaktion anschliesst.

12. Verwendung der Reaktivfarbstoffe gemäss Anspruch 1, zum Färben oder Bedrucken von cellulosehaltigen Fasermaterialien.

13. Verwendung gemäss Anspruch 12, zum Färben oder Bedrucken von Baumwolle.

**Claims**

1. A reactive dye of the formula

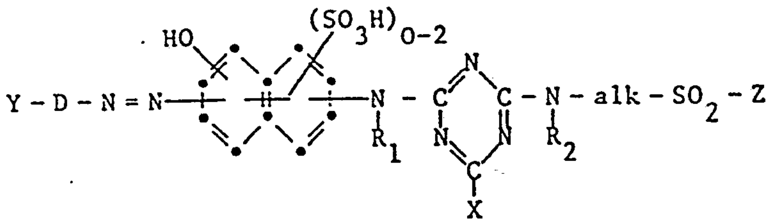

(1)

or of the formula

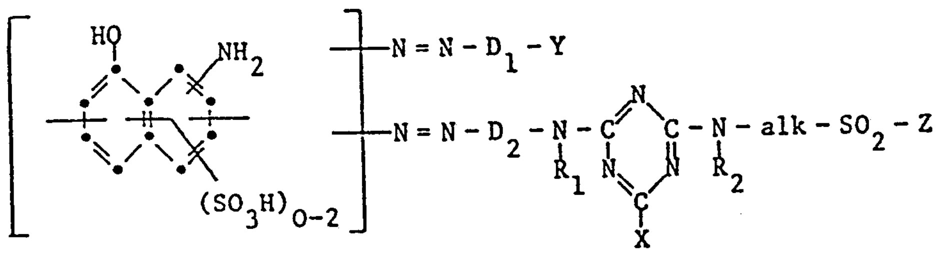

(2)

or of the formula

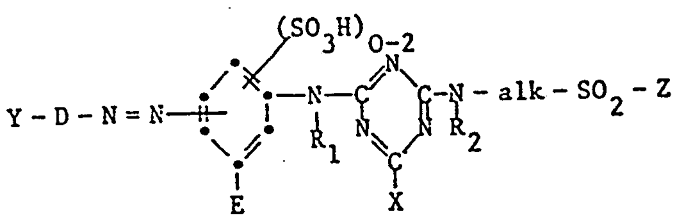

(2a)

and their metallized forms in which D, $D_1$ and $D_2$ are each a phenylene or naphtylene radical which can be further substituted, $R_1$ is hydrogen or substituted or unsubstituted $C_{1-4}$-alkyl, $R_2$ is hydrogen, substituted or unsubstituted alkyl or aryl or a radical of the formula $-alk-SO_2-Z$, $E-NH_2$, $-CH_3$, $-NH-CO-NH_2$, $-NH-CO-CH_3$ or $-NH-CO-CH_2-OH$, alk is $C_{2-6}$-alkylene, Y is a $-SO_2-Z$, $-SO_2-N(R_1)-Z$, $-N(R_1)-SO_2-Z$, $-N(R_1)-CO-(CH_2)_{3-5}-SO_2-Z$, $-SO_2-F$, $-SO_2-CH_2-CH=CH_2$, $-N(R_1)-CO-CBr=CH_2$, $-N(R_1)-CO-CHBr-CH_2Br$, $-N(R_1)-CO-CCl=CH_2$, $-N(R_1)-CO-CHCl-CH_2Cl$, $-N(R_1)-CO-CH_2Cl$ or $-N(R_1)-CO-CH=CH_2$ radical, Z is a $-CH=CH_2$ or $-CH_2CH_2-A$ radical, A is an inorganic or organic radical which is detachable under alkaline conditions, and X is fluorine, chlorine or hydroxyl.

2. A reactive dye according to Claim 1, of the formula

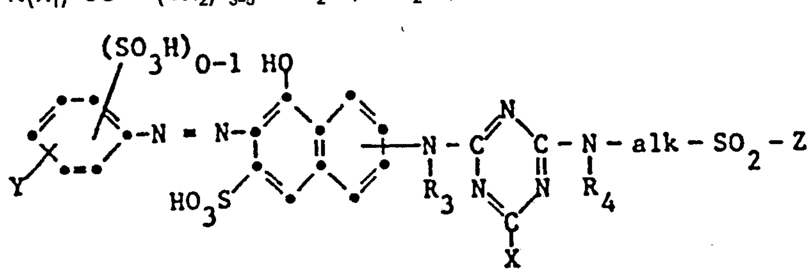

(3)

in which $R_3$ is hydrogen, methyl or ethyl, $R_4$ is hydrogen or a $-alk-SO_2-Z$ radical, alk is $C_{2-6}$-alkylene, Y is a $-SO_2-Z$ radical, Z is a $-CH=CH_2$ or $-CH_2CH_2-A$ radical, A is sulfato, acetoxy, chlorine, phosphato or thiosulfato, and X is fluorine, chlorine or hydroxyl.

3. A reactive dye according to Claim 1, of the formula

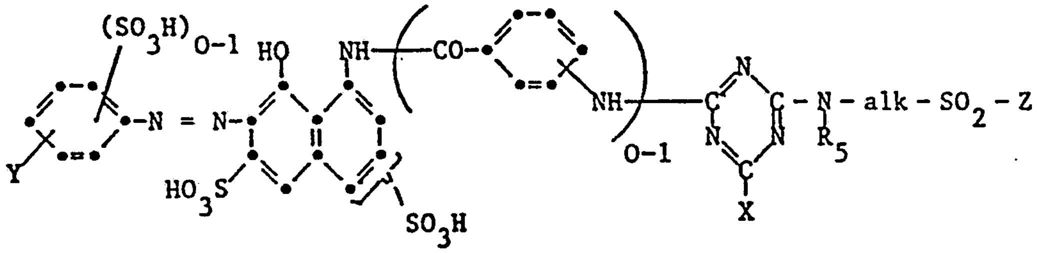

(4)

in which $R_5$ is hydrogen or a $-alk-SO_2-Z$ radical, alk is $C_{2-6}$-alkylene, Y is a $-SO_2-Z$ radical, Z is a $-CH=CH_2$ or $-CH_2CH_2-A$ radical, A is sulfato, acetoxy, chlorine, phosphato or thiosulfato, and X is fluorine, chlorine or hydroxyl.

4. A reactive dye according to Claim 1 of the formula

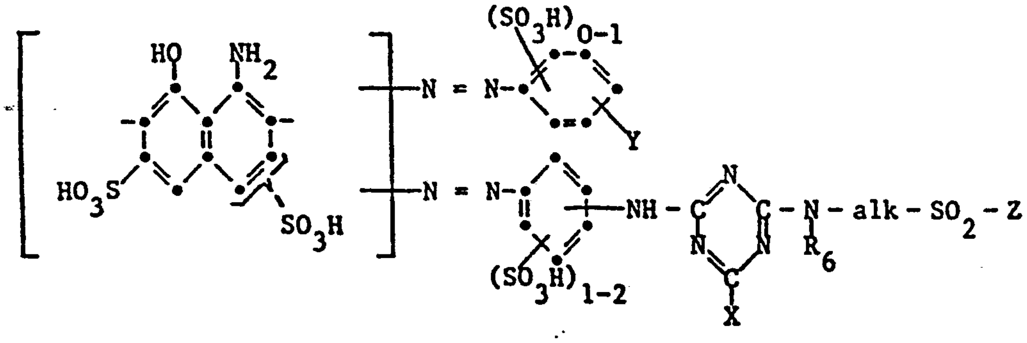

(5),

in which $R_6$ is hydrogen or a $-alk-SO_2-Z$ radical, alk is $C_{2-6}$-alkylene, Y is a $-SO_2-Z$ radical, Z is a $-CH=CH_2$ or $-CH_2CH_2-A$ radical, A is sulfato, acetoxy, chlorine, phosphato or thiosulfato, and X is fluorine, chlorine or hydroxyl.

5. A reactive dye according to Claim 4 of the formula

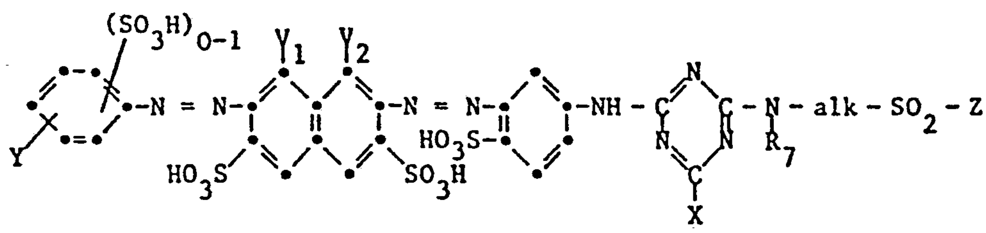

(6) ,

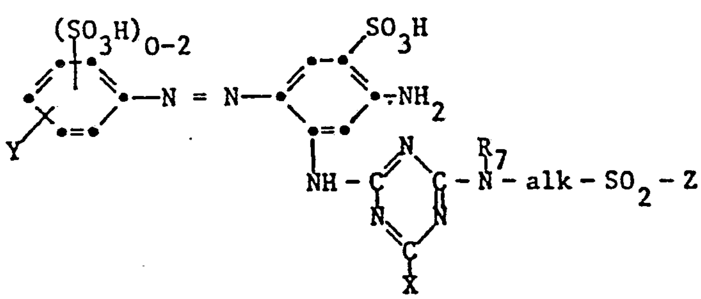

(6a) ,

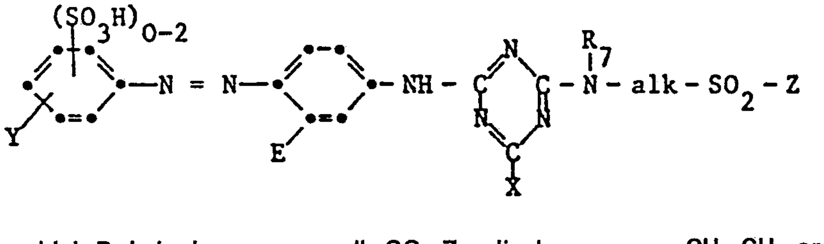

(6b)

in which $R_7$ is hydrogen or a $-alk-SO_2-Z$ radical, alk is $C_{2-6}$-alkylene, Y is a $-NH-CO-CHBr-CH_2-Br$, $-NH-CO-CBr=CH_2$ or $-SO_2-Z$ radical, Z is a $-CH=CH_2$ or $-CH_2-CH_2-A$ radical, A is sulfato, acetoxy, chlorine, phosphato or thiosulfato, X is fluorine, chlorine or hydroxyl, E is $-NH_2$, $-CH_3$,

$-NH-CO-NH_2$ or $-NH-CO-CH_3$, and one V is OH the other V is $NH_2$.

6. The reactive dye according to Claim 3, of the formula

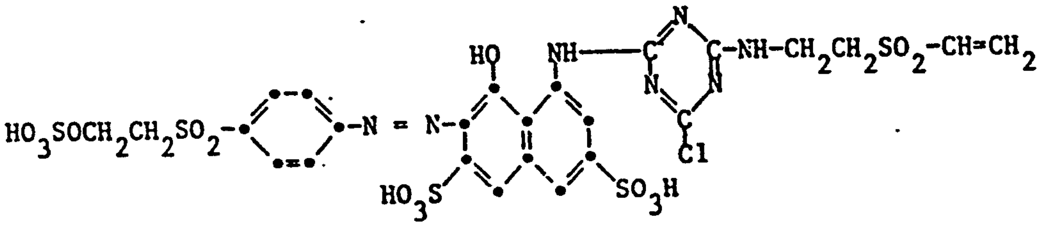

(7).

7. The reactive dye according to Claim 3, of the formula

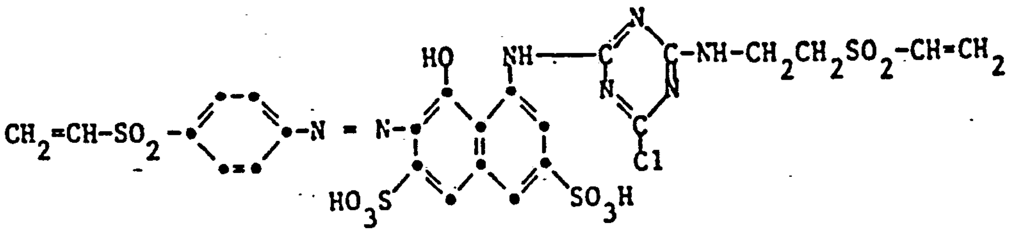

(7a).

8. The reactive dye according to Claim 3, of the formula

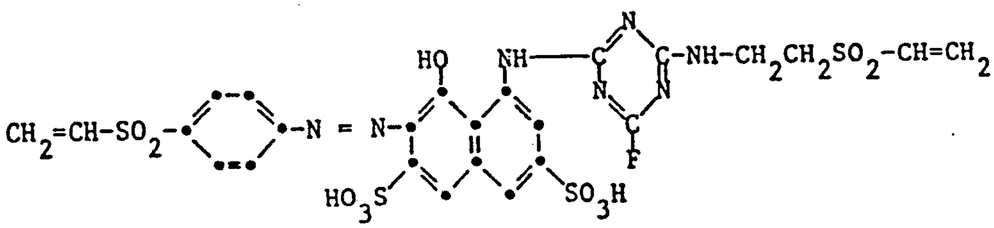

(8).

9. The reactive dye according to Claim 5, of the formula

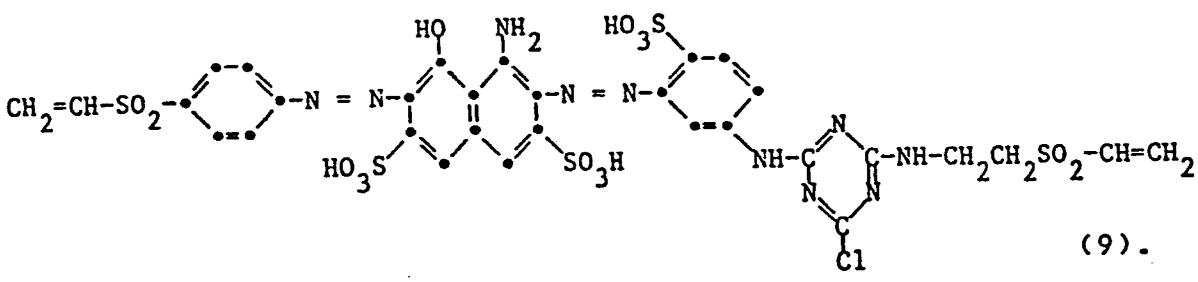

(9).

10. The reactive dye according to Claim 5, of the formula

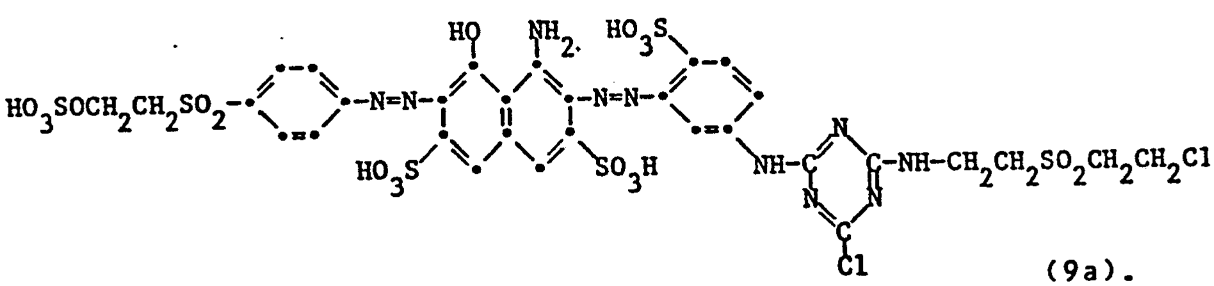

(9a).

11. A process for preparing a reactive dye according to Claim 1, which comprises reacting a dye of the formula

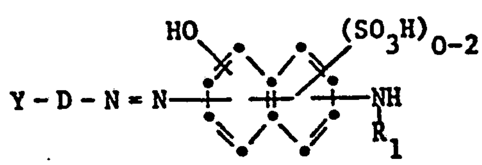

(10),

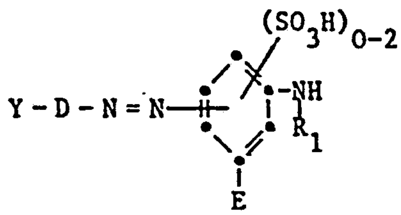

(10a)

or

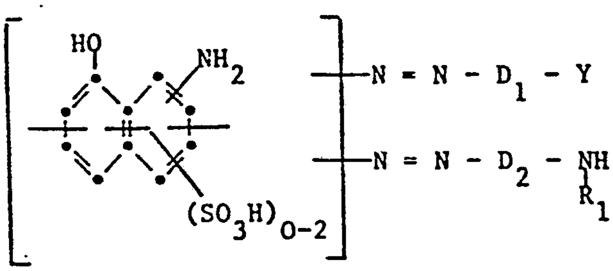

(11)

or its precursor with a reactive component to introduce the radical of the formula

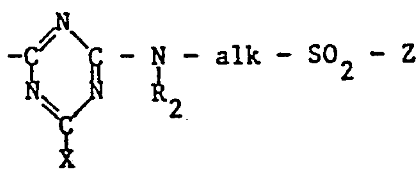

(12)

to give a reactive dye of the formula (1), (2) or (2a), or converting the intermediate obtained into the desired end dye, and if desired immediately carrying out a further conversion.

12. Use of the reactive dye according to Claim 1 for dyeing or printing cellulose-containing fibre materials.

13. Use according to Claim 12 for dyeing and printing cotton.

**Revendications**

1. Colorants réactifs de formule

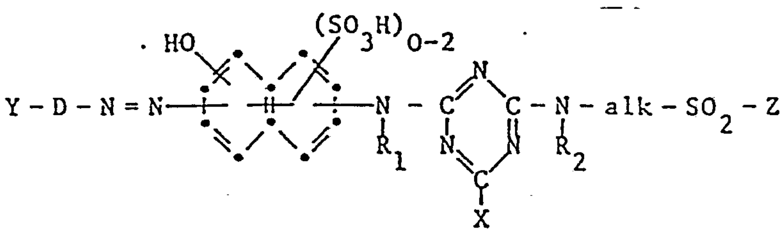

(1)

ou de formule

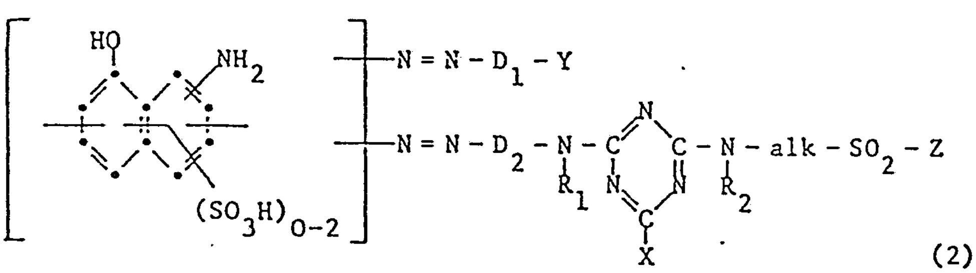

(2) ,

ou de formule

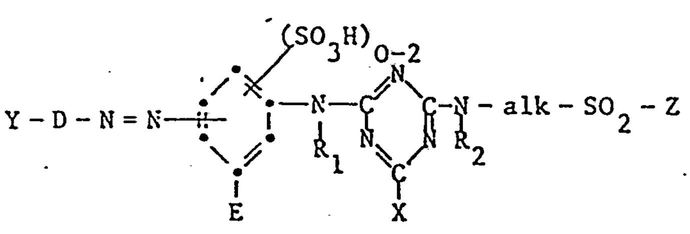

(2a)

et leurs formes métallées,
dans lesquels D, $D_1$ et $D_2$ représentent un groupe phénylène ou naphtylène qui peut porter d'autres substituants, $R_1$ représente un atome d'hydrogène ou un groupe alkyle en $C_{1-4}$ éventuellement substitué, $R_2$ représente un atome d'hydrogène,

un groupe alkyle ou aryle éventuellement substitué ou un groupe de formule $-alk-SO_2-Z$, $E-NH_2$, $-CH_2$, $-NH-CO-NH_2$, $-NH-CO-CH_3$ ou $-NH-CO-CH_2-OH$, alk représente un groupe alkylène $C_{2-6}$, Y un groupe $-SO_2-Z$, $-SO_2-N(R_1)-Z$, $N(R_1)-SO_2-Z$,$-N(R_1)-CO-(CH_2)_{3-5}-SO_2-z$, $-SO_2-F$, $-SO_2-CH_2-CH=CH_2$, $-N(R_1)-CO-CBr=CH_2$, $-N(R_1)-CO-CHBr-CH_2Br$, $-N(R_1)-CO-CCl=CH_2$, $-N(R_1)-CO-CHCl-CH_2Cl$, $-N(R_1)-CO-CH_2Cl$ ou $-N(R_1)-CO-CH=CH_2$, Z représente un groupe $-CH=CH_2$ ou $-CH_2CH$ représente un groupe $-CH=CH_2$ ou $-CH_2CH-A$, A représente un radical minéral ou organique, séparable dans des conditions alcalines et X représente un atome de fluor ou de chlore, ou un groupe hydroxy.

2. Colorants réactifs selon la revendication 1, de formule

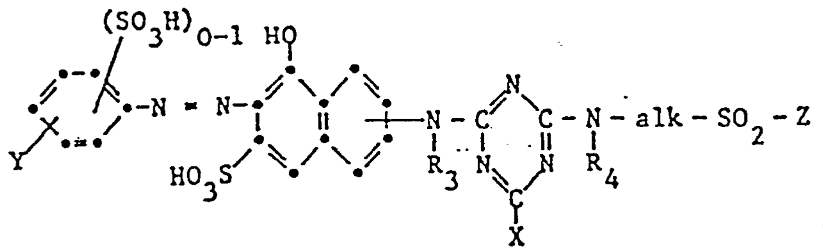

(3) ,

dans laquelle $R_3$ représente un atome d'hydrogène ou un groupe méthyle ou éthyle, $R_4$ représente un atome d'hydrogène ou un groupe $-alk-SO_2-Z$, alk représente un groupe alkylène en $C_{2-6}$, Y représente un groupe $-SO_2-Z$, Z représente un groupe $-CH=CH_2$ ou $-CH_2CH_2-A$, A représente un groupe sulfato, acétoxy, un atome de chlore, un groupe phosphato ou thiosulfato, et X représente un atome de fluor ou de chlore ou un groupe hydroxy.

3. Colorants réactifs selon la revendication 1, de formule

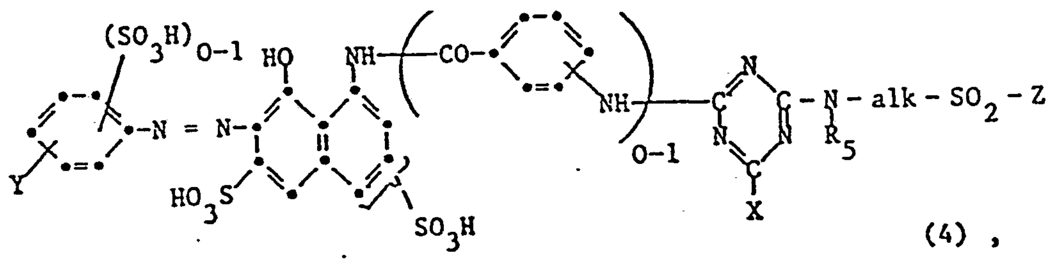

(4) ,

dans laquelle $R_5$ représente un atome d'hydrogène ou un groupe $-alk-SO_2-Z$, alk représente un groupe alkyle $C_{2-6}$, Y représente un groupe $-SO_2-Z$, Z représente un groupe $-CH=CH_2$ ou $-CH_2CH_2-A$, A représente un groupe sulfato, acétoxy, un atome de chlore, un groupe phosphate ou thiosulfato et X représente un atome de fluor ou de chlore ou un groupe hydroxy.

4. Colorants réactifs selon la revendication 1, de formule

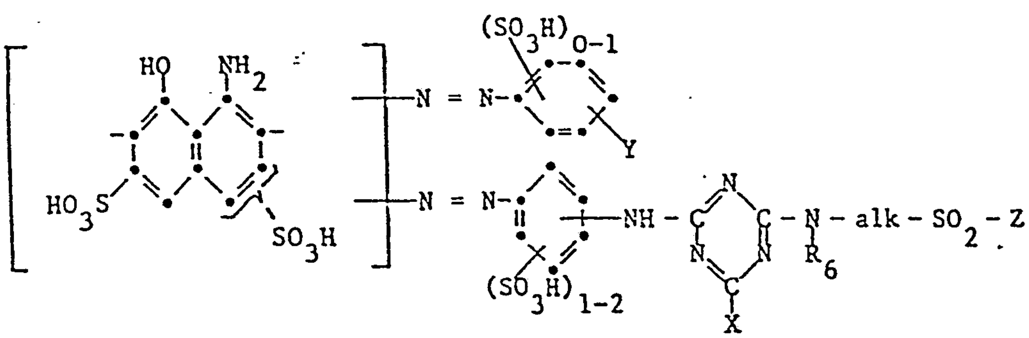

(5),

dans laquelle $R_6$ représente un atome d'hydrogène ou un groupe $-alk-SO_2-Z$, alk représente un groupe alkylène en $C_{2-6}$, Y représente un groupe $-SO_2-Z$, Z représente un groupe $-CH=CH_2$ ou $-CH_2CH_2-A$, A représente un groupe sulfato, acétoxy, un atome de chlore, un groupe phosphato ou thiosulfato et X représente un atome de fluor ou de chlore ou un groupe hydroxy.

5. Colorants réactifs selon la revendication 4, de formules

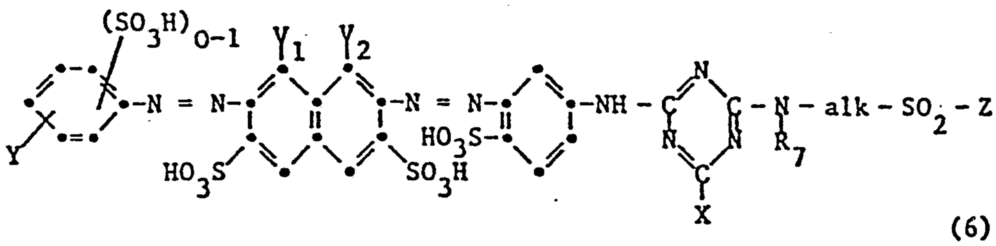

(6) ,

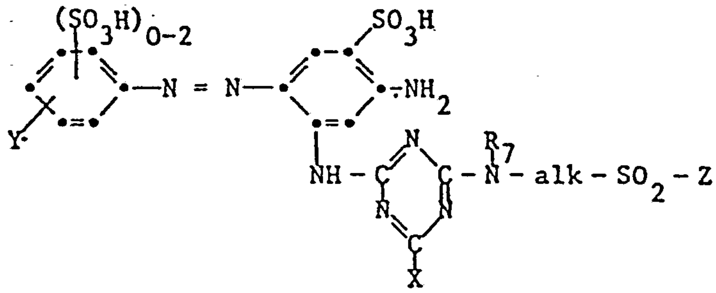

(6a) ,

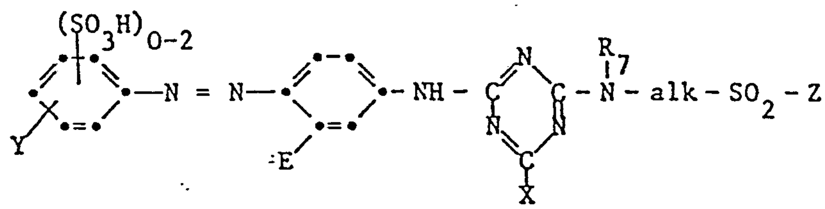

(6b)

dans laquelle $R_7$ représente un atome d'hydrogène ou un groupe -alk-$SO_2$-Z, alk représente un groupe alkylène en $C_{2-6}$, Y représente un groupe $-NH-CO-CHBr-CH_2-Br$, $-NH-CO-CBr=CH_2$ ou $-SO_2-Z$, Z représente un groupe $-CH=CH_2$ ou $-CH_2CH_2-A$, A représente un groupe sulfato, acétoxy, un atome de chlore, un groupe phosphato ou thiosulfato, X représente un atome de fluor ou de chlore ou un groupe hydroxy, E représente $-NH_2$, $-CH_3$, $-NH-CO-NH_2$ ou $-NH-CO-CH_3$, et l'un des symboles V représente un groupe OH et l'autre un groupe $NH_2$.

6. Colorant réactif selon la revendication 3, de formule

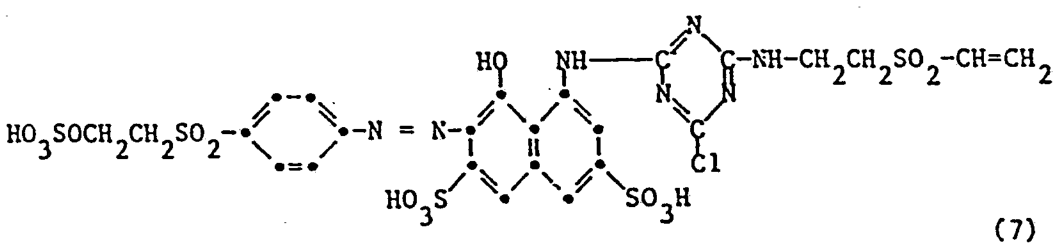

(7) .

7. Colorant réactif selon la revendication 3, de formule

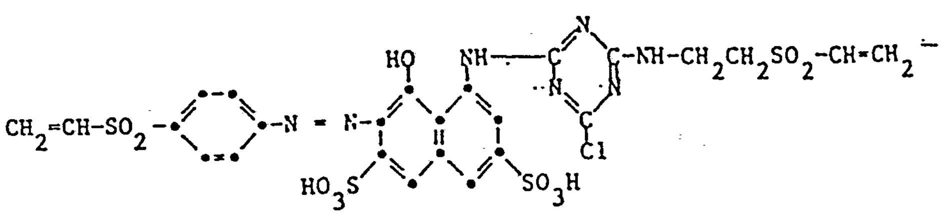

(7a) .

8. Colorant réactif selon la revendication 3, de formule

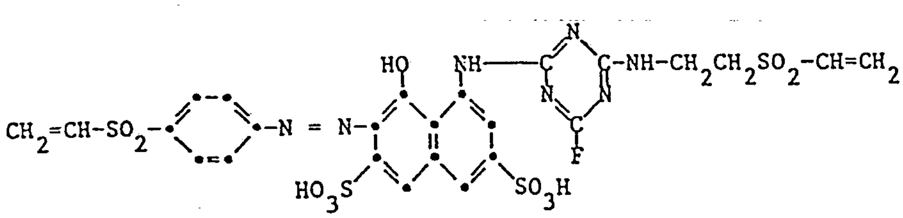

(8) .

9. Colorant réactif selon la revendication 5, de formule

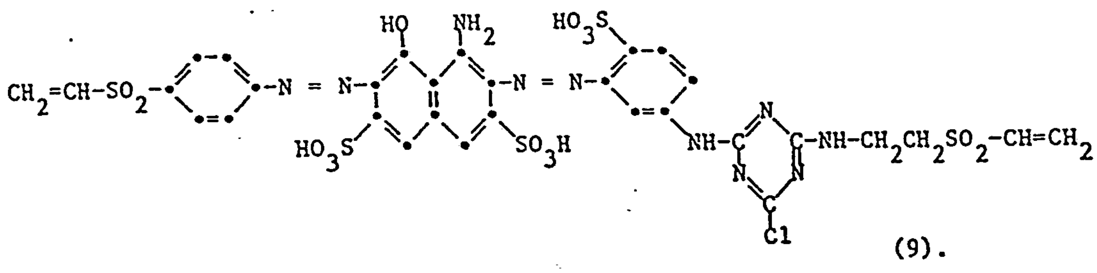

(9).

10. Colorant réactif selon la revendication 5, de formule

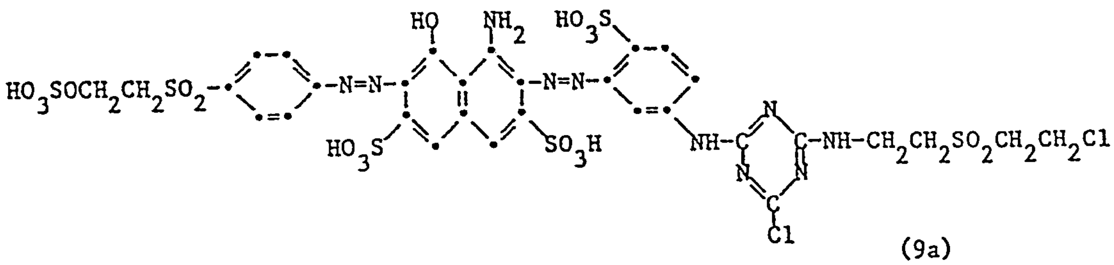

(9a)

11. Procédé de préparation des colorants réactifs selon la revendication 1, caractérisé en ce que l'on convertit des colorants de formule

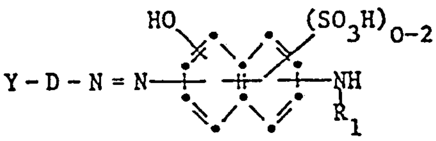

(10),

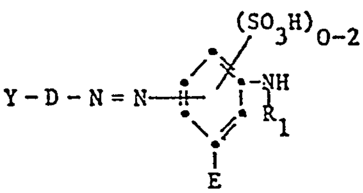

(10a)

ou

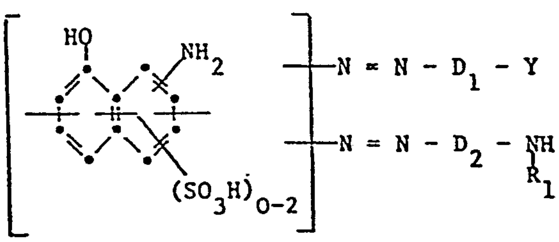

(11)

ou leurs précurseurs, par réaction avec des composants réactifs servant à introduire les groupes

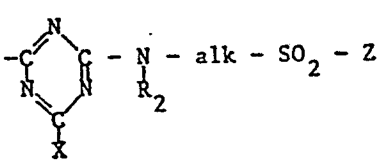

(12)

en les colorants réactifs de formule (1), (2) ou (2a) ou on convertit les produit intermédiaires en les colorants finals recherchés, après quoi, le cas échéant, on effectue une autre réaction de conversion.

12. Utilisation des colorants réactifs selon la revendication 1, pour la teinture ou l'impression de matières fibreuses contenant de la cellulose.

13. Utilisation selon la revendication 12, pour la teinture ou l'impression du coton.